(19) Europäisches Patentamt
European Patent Office
Office européen des brevets

(11) EP 1 718 400 B1

# (12) EUROPÄISCHE PATENTSCHRIFT

(45) Veröffentlichungstag und Bekanntmachung des Hinweises auf die Patenterteilung:
**16.04.2008 Patentblatt 2008/16**

(21) Anmeldenummer: **05707397.5**

(22) Anmeldetag: **15.02.2005**

(51) Int Cl.:
***B01D 69/08*** (2006.01) ***B01D 67/00*** (2006.01)
***A61M 1/16*** (2006.01) ***B01D 71/68*** (2006.01)
***B01D 71/64*** (2006.01)

(86) Internationale Anmeldenummer:
**PCT/EP2005/001506**

(87) Internationale Veröffentlichungsnummer:
**WO 2005/082502 (09.09.2005 Gazette 2005/36)**

## (54) HIGH-FLUX DIALYSEMEMBRAN MIT VERBESSERTEM TRENNVERHALTEN

HIGH-FLUX DIALYSIS MEMBRANE WITH AN IMPROVED SEPARATION BEHAVIOUR

MEMBRANE DE DIALYSE A DEBIT ELEVE PRESENTANT UN MEILLEUR COMPORTEMENT DE SEPARATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.02.2004 DE 102004008220**

(43) Veröffentlichungstag der Anmeldung:
**08.11.2006 Patentblatt 2006/45**

(73) Patentinhaber: **Membrana GmbH**
**42289 Wuppertal (DE)**

(72) Erfinder:
- **WECHS, Friedbert**
  **63939 Wörth (DE)**
- **GEHLEN, Arne**
  **63867 Johannesberg (DE)**
- **HARTEN, Bodo Von**
  **42119 Wuppertal (DE)**
- **KRÜGER, Richard**
  **42349 Wuppertal (DE)**
- **SCHUSTER, Oliver**
  **58285 Gevelsberg (DE)**

(74) Vertreter: **Schröder, Richard**
**CPW GmbH**
**Patentabteilung**
**Kasinostrasse 19-21**
**D-42103 Wuppertal (DE)**

(56) Entgegenhaltungen:
**EP-A- 0 305 787** **EP-A- 0 344 581**
**WO-A1-00/69549** **US-A- 5 505 859**
**US-A- 5 683 584**

- **PATENT ABSTRACTS OF JAPAN Bd. 016, Nr. 329 (C-0963), 17. Juli 1992 (1992-07-17) & JP 04 094727 A (NITTO DENKO CORP), 26. März 1992 (1992-03-26)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 718 400 B1

## Beschreibung

Die Erfindung betrifft eine hydrophile, mit Wasser benetzbare, semipermeable Hohlfasermembran auf Basis eines die Membranstruktur aufbauenden synthetischen Polymers insbesondere zur Hemodialyse, Hemodiafiltration oder Hemofiltration, die über ihre Wand eine offenporige, integral asymmetrische Struktur, an ihrer dem Lumen zugewandten Innenoberfläche eine Poren aufweisende Trennschicht von 0,1 bis 2 μm Dicke sowie an die Trennschicht angrenzend eine offenporige Stützschicht besitzt und die eine Ultrafiltrationsrate in Albuminlösung im Bereich zwischen 25 und 60 ml/(h·$M^2$·mmHg) aufweist. Die Erfindung betrifft des weiteren ein Verfahren zur Herstellung einer solchen Membran.

Im Besonderen ist die Erfindung auf Hohlfasermembranen gerichtet, die zur High-Flux Hemodialyse, Hemodiafiltration oder Hemofiltration geeignet sind. Bei derartigen Anwendungen zur Blutbehandlung ist wesentlich die Entfernung großer Mengen von Wasser. Darüber hinaus erfolgt nicht nur eine diffusive Entfernung niedermolekularer Urämietoxine, sondern auch eine konvektive Entfernung von sogenannten Mittelmolekülen, d.h. vor allem von niedermolekularen Proteinen.

Vor allem auch für die Blutbehandlung wie z.B. die Hemodialyse, Hemodiafiltration oder Hemofiltration sind in den letzten Jahren wegen ihrer herausragenden physikochemischen Eigenschaften verstärkt synthetische Polymere wie z.B. Polyamide oder Polyvinylalkohole sowie insbesondere technische Kunststoffe wie z.B. aromatische Sulfonpolymere, Polyphenylensulfide, Polyetherimide oder Polyetherketon untersucht worden und als Membranmaterial für Hohlfasermembranen zum Einsatz gelangt. Aufgrund der hydrophoben Eigenschaften der zuletzt genannten Polymere sind Membranen aus diesen Polymeren jedoch nicht mit wässrigen Medien benetzbar. Dies hat zur Folge, dass sie entweder nicht vollständig getrocknet werden dürfen oder aber mit einer porenstabilisierenden Flüssigkeit wie beispielsweise Glycerin oder einem Polyethylenglykol zur Porenstabilisierung gefüllt werden müssen. Ohne eine solche Stabilisierung nimmt die Permeabilität der Membran mit jedem Trocknungsvorgang kontinuierlich ab, und die Trenncharakteristik der Membran verändert sich. Auch Membranen auf Basis eines hydrophilen synthetischen Polymers oder solche, die neben dem membranbildenden hydrophoben Polymer eine hydrophile Polymerkomponente enthalten, um eine ausreichende Benetzbarkeit der Membran mit Wasser zu gewährleisten, werden in der Regel mit einem Porenfüller versehen, um eine Stabilisierung der Membranstruktur bei der Trocknung und zumindest eine gewisse Trennleistung im Bereich der Mittelmoleküle zu erreichen.

Bei der Hemodialyse, aber auch bei der Hemodiafiltration und der Hemofiltration ist es Ziel, neben den niedermolekularen nierengängigen Substanzen, d.h. Urämietoxinen und/oder urämischen Markern wie z.B. Harnstoff, Creatinin oder Phosphat insbesondere auch niedermolekulare Proteine wie z.B. $\beta_2$-Mikroglobulin ($\beta_{2M}$) aus dem zu behandelnden Blut zu entfernen. Aus zahlreichen Untersuchungen geht hervor, dass niedermolekulare Proteine Verursacher für Komplikationen während der Dialyse sind. So wird eine Ansammlung von $\beta_{2M}$ im Blut als Ursache für Amyloidose und das Carpal Tunnel Syndrom gesehen. Daher wird angestrebt, die Permeabilität der Membranen für die niedermolekularen Proteine zu erhöhen. Hieraus resultiert jedoch oftmals auch gleichzeitig ein erhöhter Verlust wertvoller Blutbestandteile wie z.B. des Albumins, die jedoch bei der Blutbehandlung im Blut verbleiben sollen.

In der US 5 505 859 werden Membranen auf Basis von cellulosischen Polymeren beschrieben, d.h. auf Basis von Polymeren, die den natürlichen Polymeren zuzuordnen sind. Zur Erzielung einer hinreichend guten Trennleistung ist bei den Membranen der US 5 505 859 vor der Trocknung eine Imprägnierung mit einer Glycerin/Wasser-Mischung zur Stabilisierung der Porenstruktur in der Membranwand erforderlich. Darüber hinaus weisen die Membranen der US 5 505 859 nur geringe Ultrafiltrationsraten auf, die Ihren Einsatz auf Anwendungen im Bereich der low-flux Dialyse beschränken.

In der DE 42 30 077 werden hydrophile Membranen für den Einsatz u.a. in der Hemodialyse beschrieben, wobei diese Membranen aus einem Gemisch von Polysulfon mit einem sulfonierten Polysulfon bestehen. Zur Stabilisierung der Poren werden die Membranen vor der Trocknung mit einer Glycerin/Wasser-Mischung nachbehandelt. Gemäß den Beispielen der DE 42 30 077 werden zwar z.T. sehr geringe Albumindurchlässigkeiten mit Siebkoeffizienten für Albumin im Bereich 0,001 und darunter erreicht, jedoch geht dies einher mit relativ geringen Durchlässigkeiten im mittelmolekularen Bereich, d.h. mit Siebkoeffizienten bis maximal 0,43 für Cytochrom C mit einem Molekulargewicht von 12 500 Dalton, das als Marker molekül für $\beta_{2M}$ verwendet wird. Hohe Siebkoeffizienten für Cytochrom C im Bereich bis 0,87 werden nur dann erreicht, wenn eine relativ hohe Albumindurchlässigkeit toleriert wird, d.h. die Siebkoeffizienten für Albumin im Bereich bis 0,04 liegen. Derartig hohe Albumindurchlässigkeiten sind jedoch verbunden mit hohen Albuminverlusten bei der Dialyse und daher für Dialysepatienten nicht tolerabel.

Die EP 305 787 betrifft asymmetrische Membranen z.B. für die Hemodialyse, die aus einem synthetischen ersten Polymer, vorzugsweise einem Polyamid, und einem hydrophilen zweiten Polymer wie z.B. einem Polyvinylpyrrolidon oder einem Polyethylenglykol aufgebaut sind. Die Membranen besitzen einen aus drei Schichten zusammengesetzten Aufbau mit einer Trennschicht in Form einer dichten und relativ dünnen Haut, einer darunterliegenden Schicht mit Schwammstruktur und daran angrenzend einer dritten Schicht mit einer aus fingerförmigen, groben Poren bestehenden Struktur. Derartige Strukturen mit Fingerporen werden in der Anwendung jedoch nicht bevorzugt, da sie zu vergleichsweise geringen mechanischen Festigkeiten führen und relativ dicke Membranwandungen benötigt werden,

um eine hinreichende Stabilität der Membranen zu erreichen. Den Beispielen der EP 305 787 ist zu entnehmen, dass die Membranen zur Stabilisierung der Porenstruktur ebenfalls mit Glycerin nachbehandelt werden. Für die Membranen der EP 305 787 werden so Siebkoeffizienten für Albumin von etwa 0,001 und für $\beta_{2M}$ von 0,6 bis 0,8 erreicht.

Die EP 344 581 hat sich zur Aufgabe gestellt, Membranen für die Hemodialyse ohne Fingerporen und ohne asymmetrische Porengrößen zu Verfügung zu stellen, die die Entfernung gefährlicher Stoffe wie $\beta_{2M}$ und den Rückhalt nützlicher Komponenten wie Albumin mit hoher Effizienz ermöglichen. Die Membranen der EP 344 581 bestehen aus einer Mischung eines Polyarylats mit einem Polysulfon und weisen über dem Membranquerschnitt eine homogene und gleichförmige fibrilläre Struktur auf. Die in der EP 344 581 offenbarten Membranen sind aufgrund ihrer Polymerzusammensetzung hydrophob und müssen nach den Angaben der EP 344 581 entweder vor der Trocknung mit Glycerin behandelt werden oder zunächst z.B. mit einem Alkohol gespült werden, der anschließend durch Wasser ersetzt wird.

In der EP 168 783 wird eine hydrophile asymmetrische mikroporöse Polysulfon-Hohlfasermembran für die Hemodialyse mit einer offenporigen schaumartigen Stützstruktur beschrieben. Die Hydrophilie wird durch einen Anteil von 1 bis10 Gew.-% eines hydrophilen Polymers, welches vorzugsweise Polyvinylpyrrolidon ist, erreicht. Gemäß der EP 168 783 wird angestrebt, die Membranen hinsichtlich ihres Trennverhaltens der natürlichen Niere anzunähern. Hierzu besitzen die Membranen der EP 168 783 eine innenliegende poröse Trennschicht mit einer Ausschlussgrenze für Moleküle mit einem Molekulargewicht zwischen 30 000 und 40 000 Dalton. In einer bevorzugten Ausführungsform weisen die Membranen der EP 168 783 einen Siebkoeffizienten von 0,005 für Humanalbumin mit einem Molekulargewicht von 65 000 Dalton auf.

Die EP 828 553 offenbart integrale, mehrfach asymmetrische Membranen aus in ε-Caprolactam löslichen Polymeren für den Einsatz in der Hemodialyse, der Hemodiafiltration oder der Hemofiltration. Die Membranen der EP 828 553 weisen einen dreischichtigen Aufbau mit einer dünnen Trennschicht auf, daran angrenzend einer schwammartigen grobporigen Stützschicht ohne Fingerporen und einer sich an die Stützschicht anschließenden dritten Schicht, deren Porengröße kleiner als die der Stützschicht ist und die die hydraulische Permeabilität der Membran bestimmt. Die EP 828 553 offenbart in ihren Beispielen eine Membran mit einem Siebkoeffizienten für Cytochrom C von 0,75 in Kombination mit einem Siebkoeffizienten für Albumin von 0,05.

Die EP 716 859 bezieht sich auf Membranen mit einer homogenen Membranstruktur, d.h. mit einer Membranstruktur ohne Asymmetrie über dem Wandquerschnitt. Die Membranen basieren beispielsweise auf Polysulfon, Polyethersulfon oder Polyarylsulfon, wobei ein hydrophiles Polymer wie z.B. Polyvinylpyrrolidon oder Polyethylenglykol zur Erhöhung der Hydrophilie der Membranen zugesetzt wurde. Die Membranen der EP 716 859 werden nach der Koagulation und vor der Trocknung mit einer Glycerinlösung imprägniert, um die Membranstruktur zu erhalten. Für die gemäß den Beispielen hergestellten Membranen werden ohne nähere Spezifizierung Siebkoeffizienten für Albumin von kleiner 0,01 angegeben. Bei kleinen Filtratflüssen von 10 ml/min lassen sich für die stabilisierten Membranen Siebkoeffizienten für $\beta_{2M}$ bis 0,88 erreichen, bei höheren Filtratflüssen, d.h. Filtratflüssen von 50 ml/min liegen die erreichten Siebkoeffizienten für $\beta_{2M}$ bei maximal 0,75. Die für diese Membranen erreichten Ultrafiltrationsraten für Wasser und die Ultrafiltrationsraten für Blut, die mit entsprechenden Ultrafiltrationsraten in Albuminlösung vergleichbar sind, sind jedoch wegen der homogenen Membranstruktur nur relativ gering und liegen unterhalb der üblicherweise in der Hemodiafiltration oder der Hemofiltration verwendeten Raten.

Die US 5 683 584 betrifft in einer Ausführungsform asymmetrische mikroporöse Hohlfasermembranen auf Basis hochpolarer Polyimide, die geringe Siebkoeffizienten für Albumin in Kombination mit hohen Siebkoeffizienten für Myoglobin aufweisen können. Die Membranen der US 5 683 584 weisen jedoch hohe Ultrafiltrationsraten auf, die für Wasser oberhalb von 500 ml/(h·m$^2$·mmHg) liegen. Derartig hohe Ultrafiltrationsraten führen jedoch bei der Dialysebehandlung zu einer großen Belastung des Patienten.

Es ist Aufgabe der vorliegenden Erfindung, für die Hemodialyse, die Hemodiafiltration und die Hemofiltration geeignete Hohlfasermembranen zur Verfügung zu stellen, die eine hohe hydraulische Permeabilität und ein gegenüber den Membranen des Stands der Technik vergleichbares Trennverhalten aufweisen, so dass insbesondere eine effiziente Entfernung von niedermolekularen Proteinen aus dem zu behandelnden Blut bei gleichzeitigem hohem Rückhalt wertvoller Blutbestandteile ermöglicht wird. Die Membranen sollen eine hohe mechanische Stabilität besitzen, auch nach Trocknung stabile Leistungseigenschaften aufweisen und eine problemlose Herstellung von Dialysatoren, die diese Hohlfasermembranen enthalten, ermöglichen.

Es ist des Weiteren Aufgabe der Erfindung, ein Verfahren zur Herstellung derartiger Hohlfasermembranen zur Verfügung zu stellen.

Die erfindungsgemäße Aufgabe wird zum einen durch eine hydrophile, mit Wasser benetzbare semipermeable Hohlfasermembran insbesondere zur Hemodialyse, Hemodiafiltration oder Hemofiltration auf Basis eines die Membranstruktur aufbauenden synthetischen hydrophilen Polymers oder einer Kombination aus einem die Membranstruktur aufbauenden synthetischen ersten Polymer und einem hydrophilen zweiten Polymer, wobei das synthetische erste Polymer in der Kombination hydrophil oder hydrophob sein kann und das hydrophile zweite Polymer im Falle, dass das synthetische erste Polymer hydrophob ist, für die Hydrophilie der Hohlfasermembran sorgt, wobei die Hohlfasermembran über ihre Wand eine offenporige integral asymmetrische Struktur, an ihrer dem Lumen zugewandten Innenoberfläche

eine Poren aufweisende Trennschicht von 0,1 bis 2μ m Dicke sowie an die Trennschicht angrenzend eine offenporige Stützschicht besitzt, wobei die Hohlfasermembran eine Ultrafiltrationsrate in Albuminlösung $UFR_{Alb}$ im Bereich von 25 bis 60 ml/(h·m$^2$·mmHg) und nach einer vorherigen Trocknung einen Siebkoeffizienten für Cytochrom C $SK_{CC}$ von mindestens 0,8 in Kombination mit einem Siebkoeffizienten für Albumin $SK_{Alb}$ von höchstens 0,005 aufweist, wobei $UFR_{Alb}$, $SK_{cc}$ und $SK_{Alb}$ nach den in der Beschreibung angegebenen Methoden zu ermitteln sind und wobei die Hohlfasermembran im trocknen Zustand frei von Zusätzen ist, die die Poren in der Membranwand stabilisieren, dadurch gekennzeichnet, dass in der Trennschicht ein Polyelektrolyt mit negativen Festladungen physikalisch gebunden ist.

Die erfindungsgemäße Aufgabe wird des Weiteren durch ein Verfahren zur Herstellung dieser Hohlfasermembranen gelöst, wobei das Verfahren die Schritte umfasst

a. Herstellung einer homogenen Spinnlösung umfassend 12 bis 30 Gew.-% eines synthetischen hydrophilen Polymers oder 12 bis 30 Gew.-%, bezogen auf das Gewicht der Spinnlösung, eines synthetischen ersten Polymers in Kombination mit 0,1 bis 30 Gew.-%, bezogen auf das Gewicht der Spinnlösung, eines hydrophilen zweiten Polymers, wobei das synthetische erste Polymer in Falle der Kombination hydrophil oder hydrophob sein kann, sowie gegebenenfalls weitere Additive in einem Lösemittelsystem,

b. Extrusion der Spinnlösung durch den Ringspalt einer Hohlfadendüse zu einem Hohlfaden,

c. Extrusion einer Innenfüllung durch die zentrale Öffnung der Hohlfadendüse, wobei die Innenfüllung ein Koagulationsmedlum für das synthetische hydrophile Polymer bzw. das synthetische erste Polymer ist, welches ein Lösemittel sowie ein Nichtlösemittel für das synthetische hydrophile Polymer bzw. das synthetische erste Polymer umfasst,

d. Inkontaktbringen der Innenfüllung mit der Innenseite des Hohlfadens zur Auslösung der Koagulation im Inneren des Hohlfadens und zur Ausbildung einer Trennschicht an der Innenseite des Hohlfadens und der Membranstruktur,

e. Hindurchleiten des Hohlfadens durch ein Koagulationsbad, um gegebenenfalls die Ausbildung der Membranstruktur zu vervollständigen und um die Membranstruktur zu fixieren,

f. Extraktion der so gebildeten Hohlfasermembran zur Entfernung des Lösemittelsystems sowie löslicher Substanzen,

g. Trocknung der Hohlfasermembran,

wobei das Verfahren dadurch gekennzeichnet ist, dass die Innenfüllung einen Polyelektrolyten mit negativen Festladungen enthält, wobei der Gewichtsanteil des Polyelektrolyten im Bereich von 0,025 bis 5 Gew.-%, bezogen auf das Gewicht der Innenfüllung, beträgt.

Die erfindungsgemäßen Membranen weisen hervorragende Trenneigenschaften mit einer scharfen Trenncharakteristik auf. Sie ermöglichen eine herausragende Elimination von niedermolekularen Proteinen bei gleichzeitig hervorragendem Rückhalt von Albumin, ohne dass eine Stabilisierung der Poren durch Nachbehandlung der Membranen mittels eines flüssigen Porenstabilisators wie z.B. Glycerin oder Polyethylenglykol erfolgen muss. Auf Grund der scharfen Trenncharakteristik und des hervorragendem Rückhalts von Albumin kann sogar die Struktur bzw. Trennschicht der erfindungsgemäßen Membranen offener ausgeführt werden, ohne dass die Siebkoeffizienten für Albumin die erfindungsgemäß geforderten Grenzen überschreiten. Hierduch lassen sich gleichzeitig die Siebkoeffizienten für Cytochrom C weiter erhöhen, und die Elimination von niedermolekularen Proteinen wie z.B. $\beta_2$-Mikroglobulin kann weiter verbessert werden.

In der Regel zeigen die erfindungsgemäßen Membranen gleichzeitig einen verbesserten Pyrogenrückhalt. Für die Anwendung in der Dialyse ist die Frage relevant, inwieweit die zur Blutbehandlung eingesetzte Membran den Endotoxin- und Pyrogentransfer durch die Membranwand verhindern kann. Studien zufolge konnten in vielen Dialysezentren insbesondere auch in der Dialysierflüssigkeit Pyrogene nachgewiesen werden. Daraus resultiert vor allem bei High-Flux Membranen die Gefahr, dass Pyrogene oder biologisch aktive Endotoxinfragmente die Membranwand passieren können. Die erfindungsgemäßen Membranen sind im wesentlichen undurchlässig gegenüber dem Durchtritt von Pyrogenen, woraus sich für den Dialysepatienten ein höheres Maß an Sicherheit ergibt.

Im Sinne der vorliegenden Erfindung wird unter einer integral asymmetrischen Membran eine Membran verstanden, bei der Trennschicht und Stützschicht aus dem gleichen Material bestehen und zusammen unmittelbar bei der Membranherstellung ausgebildet wurden, wodurch beide Schichten als integrale Einheit miteinander verbunden sind. Beim Übergang von der Trennschicht zur Stützschicht erfolgt allein eine Änderung in Bezug auf die Membranstruktur. Ausgehend von der Trennschicht ändert sich dann bei der integral asymmetrischen Membran in der Stützstruktur die Porengröße über der Wanddicke. Einen Gegensatz dazu bilden einerseits beispielsweise Composit-Membranen, die einen mehrschichtigen Aufbau aufweisen, indem auf einer porösen, oftmals mikroporösen Stützschicht oder Stützmembran in einem separaten Verfahrensschritt eine dichte Schicht als Trennschicht aufgebracht ist. Dies hat zur Folge, dass die Materialien, die die Stützschicht und die Trennschicht aufbauen, bei Composit-Membranen auch unterschiedliche Eigenschaften aufweisen. Einen Gegensatz bilden andererseits symmetrische Membranen oder homogene Membranen, bei denen die Größe der Membranporen über die Membranwand im wesentlichen gleichförmig ist, d.h. sich im wesentlichen nicht ändert. Integral asymmetrische Membranen bieten gegenüber symmetrischen, homogenen, also über die Wanddicke hinsichtlich der Porengröße gleichförmigen Membranen aufgrund der geringen Dicke der Trennschicht den Vorteil einer deutlichen Verringerung des hydraulischen Wider stands und damit eines verbesserten konvektiven Transports auch von Substanzen im Mittelmolekülbereich. Darüber hinaus erlauben sie eine unabhängige Steuerung der hydraulischen Permeabilität und der Trenncharakteristik der Membran.

Hydrophile Membranen mit negativer Ladung werden in der WO 00/69549 beschrieben. Bei diesen Membranen handelt es sich jedoch um Mikrofiltrationsmembranen zur Abtrennung, Entfernung oder Verminderung von bakteriellen Verunreinigungen aus verschiedensten Flüssigkeiten. Hierzu weisen die Membranen der WO 00/69549 Porendurchmesser z.B. im Bereich zwischen ca. 0,1 und ca. 10 $\mu$m und typischerweise von 0,2 $\mu$m auf sowie Ultrafiltrationsraten in Wasser von mindestens etwa 10000 ml/(h·m$^2$·mmHg). Aufgrund ihrer Porengröße sind die Membranen der WO 00/69549 jedoch insbesondere für Albumin durchlässig und auch wegen ihrer hohen Ultrafiltrationsraten für Anwendungen im Bereich der Hemodialyse, Hemodiafiltration oder Hemofiltration nicht geeignet.

Generell verhilft die Behandlung bzw. Beladung der Membranen des Stands der Technik mit z.B. Glycerin zwar zu einer Stabilisierung der Porenstruktur und wird bei Membranen nach dem Stand der Technik oftmals durchgeführt, um bestimmte Trennleistungen der Membran auch noch nach der für die Verarbeitung der Membranen notwendigen Trocknung zu gewährleisten. In der Weiterverarbeitung der Hohlfasermembranen zur Herstellung eines Dialysators ergeben sich mit glycerinhaltige Membranen jedoch Nachteile, so beispielsweise bei der üblichen Einbettung der Hohlfasermembranenden in ein Einbettharz. Vielfach kleben die glycerinhaltigen Membranen aneinander, so dass das Einbettmaterial, z.B. Polyurethan, nicht in Zwischenräume zwischen den Hohlfasermembranen eindringen kann. Dies hat jedoch Undichtigkeiten in den Einbettungen zur Folge. Darüber hinaus ist vor einem Einsatz von Dialysatoren, die glycerinbeladene Membranen enthalten, d.h. vor dem Einsatz zur Blutreinigung eine aufwendige Spülung der Dialysatoren erforderlich, um die Membranen von Glycerin frei zu spülen. Des Weiteren dürfen diese Membranen nach dem Stand der Technik nach einer Entfernung des Glycerins nicht getrocknet werden, da hierdurch eine deutliche Verschlechterung der Trenncharakteristik und insbesondere eine starke Verringerung der Trennleistung im Bereich Mittelmoleküle, d.h. der niedermolekularen Proteine, hervorgerufen wird und darüber hinaus z.T. eine Verschlechterung des Benetzungsverhaltens resultiert.

Die erfindungsgemäßen Hohlfasermembranen hingegen sind auf Grund ihrer hydrophilen Eigenschaften auch nach einer Trocknung mit Wasser oder wässrigen Medien benetzbar. Sie weisen darüber hinaus ihre charakteristischen Trenneigenschaften nach einer Trocknung, d.h. im trockenen Zustand auch dann auf, wenn sie nicht nach der Extraktion und vor der Trocknung beispielsweise mit einer Glycerinlösung nachbehandelt wurden, d.h. auch wenn die Hohlfasermembranen im trockenen Zustand, d.h. nach der Trocknung frei von Zusätzen sind, die die Poren in der Membranwand stabilisieren, also auch wenn im trockenen Zustand der erfindungsgemäßen Hohlfasermembranen die Poren in der Membranwand keine sie stabilisierende Zusätze wie z.B. Glycerin enthalten. Gegenüber Membranen des Stands der Technik zeigen die erfindungsgemäßen Membranen also eine stabile herausragende Trenncharakteristik und damit ein verbessertes Trennverhalten.

Natürlich kann die erfindungsgemäße Membran nach der Trocknung auch mit Glycerin beladen werden, sofern dies für zweckmäßig erachtet wird. Im Unterschied zu bekannten Hohlfasermembranen behält die erfindungsgemäße Hohlfasermembran ihre Eigenschaften mit einer scharfen Trenncharakteristik aber auch nach Entfernung des Glycerins und anschließender Trocknung. Wie ausgeführt, weist die erfindungsgemäße Hohlfasermembran ihre Eigenschaften nach Extraktion und Trocknung auf, selbst wenn vor der Trocknung keine Behandlung mit porenstabilisierenden Zusätzen erfolgt ist. In Bezug auf die scharfe Trenncharakteristik ist es darüber hinaus auch nicht von Belang, ob die Membran einer nachträglichen üblicherweise bei der Herstellung von Dialysatoren angewendeten Sterilisation unterzogen worden sind. Daher schließt die vorliegende Erfindung auch sterilisierte Membranen mit ein.

Bevorzugt weist die erfindungsgemäße Hohlfasermembran einen Siebkoeffizienten für Cytochrom C von mindestens 0,85 und besonders bevorzugt von mindestens 0,9 auf. In einer weiteren bevorzugten Ausführungsform beträgt der Siebkoeffizient für Albumin höchstens 0,003. In einer vorteilhaften Ausführungsform weist die erfindungsgemäße Hohlfasermembran einen Siebkoeffizienten für Cytochrom C von mindestens 0,85 in Kombination mit einem Siebkoeffizienten für Albumin von höchstens 0,003 auf. Besonders bevorzugt sind erfindungsgemäße Hohlfasermembranen mit einem Siebkoeffizienten für Cytochrom C von mindestens 0,9 in Kombination mit einem Siebkoeffizienten für Albumin von höchstens 0,003.

Erfindungsgemäß weist die Hohlfasermembran eine Ultrafiltrationsrate in Albuminlösung im Bereich von 25 bis 60 ml/(h·m$^2$·mmHg) auf. Eine Ultrafiltrationsrate in Albuminlösung unterhalb von 25 ml/(h·m$^2$·mmHg) ist nicht ausreichend für die Entfernung großer Mengen von Wasser bei der Blutbehandlung, und Membranen mit solch geringen Ultrafiltrationsraten zeigen keine ausreichende Leistung für Aufgaben im Bereich der High-Flux Hemodialyse, der Hemodiafiltration oder der Hemofiltration. Bei Ultrafiltrationsraten in Albuminlösung oberhalb 60 ml/(h·m$^2$·mmHg) besteht hingegen die Gefahr, dass bei der Dialysebehandlung an der Dialysemaschine ein extrem niedriger oder auch ein negativer Transmembrandruck angezeigt wird, der zu Alarmmeldungen führen kann und gegebenenfalls Eingriffe in die Dialysebehandlung zur Korrektur erforderlich machen kann. Bevorzugt liegt die Ultrafiltrationsrate in Albuminlösung der

erfindungsgemäßen Membranen im Bereich von 30 bis 55 ml/(h·m$^2$·mmHg).

Bei dem die Membranstruktur der hydrophilen Hohlfasermembran aufbauenden Polymer handelt es sich erfindungsgemäß um ein synthetisches Polymer, das beim erfindungsgemäßen Verfahren in einer Konzentration von 12 bis 30 Gew.-% in der Spinnlösung enthalten ist. Dabei kann es sich bei dem die Membranstruktur aufbauenden synthetischen Polymer bzw. synthetischen ersten Polymer um ein hydrophiles synthetisches Polymer handeln oder auch um eine Mischung verschiedener hydrophiler synthetischer Polymerer. So können z.B. hydrophile Polyamide, Polyvinylalkohole, Ethylen-Vinylalkohol Copolymere, Polyether-Polyamid Blockcopolymere, Polyethylenoxid-Polycarbonat Copolymere oder modifizierte, ursprünglich hydrophobe Polymere wie z.B. mit Sulfonsäuregruppen hydrophil modifizierte Polysulfone oder Polyethersulfone verwendet werden.

Bei der Herstellung der erfindungsgemäßen Membranen unter Verwendung eines die Membranstruktur aufbauenden synthetischen hydrophilen ersten Polymers kann die Spinnlösung als weitere Komponente ein hydrophiles zweites Polymer enthalten, das in der Spinnlösung eine viskositätserhöhende Wirkung hat und/oder auch als Nukleierungsmittel und Porenbildner bei der Ausbildung der Membranstruktur fungiert.

In einer bevorzugten Ausführungsform handelt es sich bei dem die erfindungsgemäße Hohlfasermembran aufbauenden synthetischen ersten Polymer um ein hydrophobes erstes Polymer, das mit einem hydrophilen zweiten Polymer kombiniert ist. Im Falle der Verwendung eines hydrophoben ersten Polymers hat das hydrophile zweite Polymer neben der Wirkung, im erfindungsgemäßen Verfahren die Viskosität der Spinnlösung zu erhöhen und/oder als Nukleierungsmittel und Porenbildner zu fungieren, auch die Aufgabe, für die Hydrophilie der erfindungsgemäßen Hohlfasermembran zu sorgen. Daher umfasst diese bevorzugte Hohlfasermembran ein hydrophobes erstes Polymer und ein hydrophiles zweites Polymer.

Im Falle des Einsatzes eines hydrophilen zweiten Polymers beträgt dessen Konzentration in der Spinnlösung 0,1 bis 30 Gew.%, bezogen auf das Gewicht der Spinnlösung. Bevorzugt beträgt die Konzentration des zweiten hydrophilen Polymer in der Spinnlösung 1 bis 25 Gew.-% und besonders bevorzugt 5 bis 17 Gew.-%, bezogen auf das Gewicht der Spinnlösung.

Für das erfindungsgemäße Verfahren können als synthetisches Polymer bzw. synthetisches erstes Polymer solche Polymere verwendet werden, die eine gute Löslichkeit in polaren aprotischen Lösemitteln aufweisen und aus diesen unter Bildung asymmetrischer Membranen ausgefällt werden können. Als bevorzugte membranbildende, d.h. die Struktur der erfindungsgemäßen Hohlfasennmembranen aufbauende hydrophobe erste Polymere werden im Rahmen der vorliegenden Erfindung technische Kunststoffe aus der Gruppe der aromatischen Sulfonpolymere, wie z.B. Polysulfon, Polyethersulfon, Polyphenylensulfon oder Polyarylethersulfon, der Polycarbonate, Polyimide, Polyetherimide, Polyetherketone, Polyphenylensulfide, Copolymere oder Modifikationen dieser Polymere oder Mischungen dieser Polymere eingesetzt. In einer besonders bevorzugten Ausführungsform ist das hydrophobe erste Polymer ein Polysulfon oder ein Polyethersulfon mit den in nachstehenden Formeln (I) und (II) dargestellten wiederkehrenden Moleküleinheiten

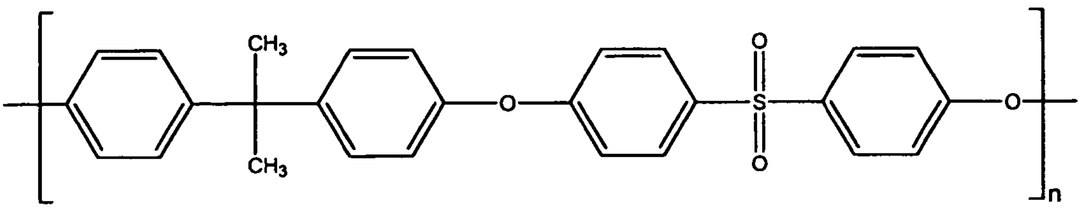

(I)

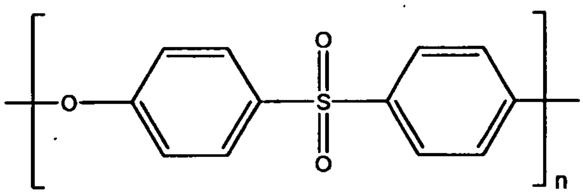

(II)

Für die Herstellung der erfindungsgemäßen Hohlfasermembranen kann im wesentlichen von den im Stand

der Technik bekannten Verfahren zur Herstellung von hydrophilen, mit Wasser benetzbaren semipermeablen Hohlfasermembranen aus einem synthetischen Polymer, die eine integral asymmetrische Struktur und eine Trennschicht an ihrer Innenseite aufweisen, ausgegangen werden. Derartige Verfahren nach dem Stand der Technik auf Basis einer Nichtlöser-induzierten Koagulation werden beispielsweise in der EP 168 783, der EP 568 045, der EP 750 938 oder der EP 828 553 beschrieben, auf deren diesbezüglichen Offenbarungsgehalt an dieser Stelle ausdrücklich Bezug genommen wird. Ausgehend beispielsweise von den dort beschriebenen Verfahren wird zur Ausbildung einer Hohlfasermembran mit einem Siebkoeffizienten für Cytochrom C von mindestens 0,80 in Kombination mit einem Siebkoeffizienten für Albumin von höchstens 0,005 nach dem erfindungsgemäßen Verfahren eine Innenfüllung eingesetzt, die einen Polyelektrolyten mit negativen Festladungen enthält.

Erfindungsgemäß beträgt die Konzentration des synthetischen hydrophilen bzw. des synthetischen ersten Polymers in der Spinnlösung 12 bis 30 Gew.-%. Unterhalb einer Konzentration von 12 Gew.-% ergeben sich Nachteile bei der Durchführung des Spinnprozesses und hinsichtlich der mechanischen Stabilität der hergestellten Hohlfasermembran. Andererseits weisen Membranen, die aus Spinnlösungen mit mehr als 30 Gew.-% des synthetischen hydrophilen bzw. des synthetischen ersten Polymers erhalten werden, eine zu dichte Struktur und zu geringe Permeabilitäten auf. Vorzugsweise enthält die Spinnlösung 15 bis 25 Gew.-% des synthetischen hydrophilen bzw. des synthetischen ersten Polymers. Das synthetische hydrophile bzw. des synthetische erste Polymer kann auch Additive wie z.B. Antioxidantien, Nukleierungsmittel, UV-Absorber und dergleichen enthalten, um die Eigenschaften der Membranen in gezielter Weise zu modifizieren.

Als hydrophiles zweites Polymer werden vorteilhafterweise langkettige Polymere eingesetzt, die auf der einen Seite eine Kompatibilität zu dem synthetischen ersten Polymer aufweisen, und die über wiederkehrende polymere Einheiten verfügen, die an sich hydrophil sind. Vorzugsweise ist das hydrophile zweite Polymer Polyvinylpyrrolidon, Polyethylenglykol, Polyvinylalkohol, Polyglykolmonoester, Polysorbitat, wie z.B. Polyoxyethylensorbitanmonooleat, Carboxylmethylcellulose oder eine Modifikation oder ein Copolymer dieser Polymere. Besonders bevorzugt ist Polyvinylpyrrolidon. Es ist in einer weiteren bevorzugten Ausführungsform auch möglich, Mischungen von verschiedenen hydrophilen Polymeren einzusetzen und insbesondere Mischungen von hydrophilen Polymeren mit unterschiedlichen Molekulargewichten, z.B. Mischungen von Polymeren, deren Molekulargewicht sich um den Faktor 5 oder mehr unterscheidet.

Ein wesentlicher Anteil des hydrophilen zweiten Polymers wird bei der Herstellung der erfindungsgemäßen Hohlfasermembran aus der Membranstruktur ausgewaschen. Mit Blick auf die hydrophilen Eigenschaften der erfindungsgemäßen Hohlfasermembranen und ihre Benetzbarkeit ist es im Falle der bevorzugten Verwendung eines hydrophoben Polymers als synthetischem ersten Polymer jedoch erforderlich, dass ein bestimmter Anteil des hydrophilen zweiten Polymers in der Membran verbleibt. Im Falle der bevorzugten Verwendung eines hydrophoben Polymers als synthetischem ersten Polymer weist die fertige Hohlfasermembran daher das hydrophile zweite Polymer bevorzugt in einer Konzentration im Bereich zwischen 1 bis 15 Gew.-% und besonders bevorzugt zwischen 3 und 10 Gew.-%, bezogen auf das Gewicht der fertigen Hohlfasermembran, auf. Das hydrophile zweite Polymer kann darüber hinaus in der fertigen Membran noch chemisch oder physikalisch modifiziert werden. So kann beispielsweise Polyvinylpyrrolidon nachträglich durch Vernetzung wasserunlöslich gemacht werden.

Das einzusetzende Lösemittelsystem ist auf das verwendete synthetische hydrophile bzw. das synthetische erste Polymer sowie gegebenenfalls auf das zweite hydrophile Polymer abzustimmen. Erfindungsgemäß umfasst das zur Herstellung der Spinnlösung eingesetzte Lösemittelsystem polare aprotische Lösemittel wie insbesondere Dimethylformamid, Dimethylacetamid, Dimethylsulfoxid, N-Methylpyrrolidon oder ε-Caprolactam oder Mischungen dieser Lösemittel untereinander. Das Lösemittelsystem kann weitere Cosolventien enthalten, im Falle der Verwendung von ε-Caprolactam haben sich Butyrolacton, Propylencarbonat oder Polyalkylenglykol bewährt. Darüber hinaus kann das Lösemittelsystem Nichtlöser für das Polymer wie z.B. Wasser, Glycerin, Polyethylenglykole oder Alkohole wie Ethanol oder Isopropanol enthalten.

Nach Entgasung und Filtrierung zur Entfernung von nicht gelösten Partikeln wird die homogene Spinnlösung durch den Ringspalt einer üblichen Hohlfadendüse zu einem Hohlfaden extrudiert. Durch die in der Hohlfadendüse koaxial zum Ringspalt angeordnete zentrale Düsenöffnung wird eine Innenfüllung extrudiert, die ein Koagulationsmedium für das hydrophobe erste Polymer ist und die gleichzeitig das Lumen des Hohlfadens stabilisiert.

Die Innenfüllung, d.h. das innere Koagulationsmedium besteht aus einem der zuvor genannten Lösemittel, vorzugsweise einem der auch im Lösemittelsystem der Spinnlösung eingesetzten Lösemittel, oder dem zur Herstellung der Spinnlösung eingesetzten Lösemittelsystem sowie notwendigerweise einem Nichtlöser. Dieser Nichtlöser soll die Koagulation des synthetischen hydrophilen bzw. des synthetischen ersten Polymers auslösen, das gegebenenfalls vorhandene hydrophile zweite Polymer jedoch vorzugsweise lösen. Sofern im Lösemittelsystem ein Nichtlöser enthalten ist, kann es sich bei dem in der Innenfüllung enthaltenen um denselben Nichtlöser handeln, wobei natürlich zur Erzielung einer ausreichenden Fällwirkung die Nichtlöserkonzentration in der Innenfüllung gegenüber derjenigen des Lösemittelsystem erhöht ist. Für die Innenfüllung kann jedoch auch ein anderer Nichtlöser als für das Lösemittelsystem eingesetzt werden. Der eingesetzte Nichtlöser kann auch aus mehreren verschiedenen Nichtlöserkomponenten zusammengesetzt sein.

Erfindungsgemäß enthält die Innenfüllung einen Polyelektrolyten mit negativen Festladungen, wobei der Polyelektrolyt in der Innenfüllung in gelöster Form vorliegt. Unter einem Polyelektrolyten mit negativen Festladungen wird im Rahmen der vorliegenden Erfindung ein Polymer verstanden, das funktionelle Gruppen mit negativen Ladungen enthält oder solche Gruppen in einem hinreichen basischen Medium ausbilden kann, wobei die funktionellen Gruppen kovalent an das Polymer gebunden sind. Dadurch sind zwangsläufig auch die negativen Ladungen kovalent, und damit fest an das Polymer gebunden.

Wichtig ist, dass der erfindungsgemäß verwendete Polyelektrolyt mit negativen Festladungen tatsächlich ein Polymer mit den vorstehend definierten Eigenschaften ist, also ein Molekül, in dem eine große Zahl, vorzugsweise mindestens einige hundert und besonders bevorzugt mindestens einige tausend Monomereinheiten kovalent verknüpft sind, wodurch ein Molekulargewicht resultiert, das vorzugsweise im Bereich > 7 000 Dalton und besonders bevorzugt im Bereich von > 70 000 Dalton liegt. Der Einsatz von niedermolekularen Elektrolyten mit negativen Festladungen in der Innenfüllung, wie z.B. von Zitronensäure, deren drei Säuregruppen drei negative Ionen bilden können, führt zu Membranen, die keine erhöhte Trennschärfe aufweisen. Ebenso ist es wichtig, dass der erfindungsgemäß eingesetzte Polyelektrolyt negative Festladungen besitzt. Setzt man der Innenfüllung Polyelektrolyte mit positiven Festladungen zu, wie z.B. ein Copolymer aus Vinylpyrrolidon und Methacrylamidopropyltrimethylammoniumchlorid, resultieren Membranen, die ebenfalls keine erhöhte Trennschärfe aufweisen.

In einer bevorzugten Ausführungsform der Erfindung ist der Polyelektrolyt mit negativen Festladungen ausgewählt aus der Gruppe der Polyphosphorsäuren, Polysulfonsäuren oder Polycarbonsäuren, und von letzteren insbesondere Homo- und Copolymere der Acrylsäure. Besonders wirksam hinsichtlich der Verbesserung des Trennverhaltens der Hohlfasermembranen haben sich teilvemetzte Acrylsäuren, Copolymere aus Methacrylsäure und Methylmethacrylat, Copolymere aus Acrylsäure und Vinylpyrrolidon und Copolymere aus Acrylsäure, Vinylpyrrolidon und Laurylmethacrylat erwiesen.

Eine besonders ausgeprägte Erhöhung der Trennschärfe wird beobachtet, wenn der Polyelektrolyt mit negativen Festladungen so ausgewählt wird, dass er in der als Fällungsmittel wirkenden Innenfüllung vollständig löslich ist, nicht aber in den einzelnen Komponenten der Innenfüllung. Ferner wird eine besonders ausgeprägte Erhöhung der Trennschärfe beobachtet, wenn der erfindungsgemäß eingesetzte Polyelektrolyt mit negativen Festladungen so ausgewählt wird, dass er in Kontakt mit der Spinnlösung ausfällt.

Erfindungsgemäß liegt der Polyelektrolyt mit negativen Festladungen in der Innenfüllung in einer Konzentration von 0,025 bis 5 Gew.-% vor, bezogen auf das Gewicht der Innenfüllung. Unterhalb einer Konzentration von 0,025 Gew.-% lässt sich die erfindungsgemäße scharfe Trenncharakteristik nicht mehr sicher erreichen. Bei einer Konzentration des erfindungsgemäß eingesetzten Polyelektrolyten oberhalb von 5 Gew.-% ist hingegen die Löslichkeit des Additivs in der Innenfüllung und damit auch eine ausreichende Spinnstabilität nicht mehr gewährleistet. Darüber hinaus führen Konzentrationen oberhalb von 5 Gew.-% oftmals zu einer Reduzierung der Permeabilitäten der Membranen. Besonders bevorzugt beträgt die Konzentration des Polyelektrolyten mit negativen Festladungen 0,05 bis 1 Gew.-%.

Die Fällwirkung der Innenfüllung muss so ausgelegt sein, dass es an der Innenseite, d.h. an der dem Lumen zugewandten Seite der Hohlfasermembran, zur Ausbildung einer Trennschicht und einer daran in Richtung auf die Außenseite der Hohlfasermembran angrenzenden Stützschicht kommt. In Kombination mit der Zugabe des Polyelektrolyten mit negativen Festladungen zur Innenfüllung lassen sich erstmals die erfindungsgemäßen Hohlfasermembranen herstellen, die auch nach einer Trocknung und ohne vorherige Behandlung mit einem die Poren in der Membranwand stabilisierenden Zusatz wie z.B. Glycerin die erfindungsgemäß geforderte scharfe Trenncharakteristik aufweisen. Es wird vermutet, dass der Polyelektrolyt mit negativen Festladungen Einfluss auf die Ausbildung der Trennschicht und insbesondere auf die Ausbildung der Poren in der Trennschicht in Richtung einer engeren Porengrößenverteilung sowie auch Einfluss auf die Oberflächenpolarität der Membran hat. Letzteres wirkt sich in Richtung einer veränderten Sekundärmembran beim Einsatz der erfindungsgemäßen Membranen aus. Es wird des Weiteren vermutet, dass die Änderungen in Bezug auf die Trennschicht auch Ursache für die höhere Sicherheit der erfindungsgemäßen Membranen gegen Pyrogendurchtritt sind.

Dabei ist der Polyelektrolyt mit negativen Festladungen in der Trennschicht physikalisch gebunden. Dies bedeutet, dass besagter Polyelektrolyt nicht chemisch in der Trennschicht der erfindungsgemäßen Membran gebunden ist. Die physikalische Bindung des Polyelektrolyten in der Trennschicht ist so stabil, dass weder das bei der nasschemischen Herstellung der Membran unvermeidliche Waschen, oder Extrahieren, noch das Sterilisieren oder der Einsatz der erfindungsgemäßen Membran zu einem nennenswerten Verlust der Membran an Polyelektrolyt oder gar zu einer Polyelektrolyt-freien Membran führt. Ohne sich auf die folgende Erklärung festlegen lassen zu wollen wird vermutet, dass Verhakungen und Verschlaufungen der Polymerketten des Polyelektrolyten mit den Polymerketten des membranbildenden Polymers, wie sie z.B. während des erfindungsgemäßen Verfahrens dadurch zustande kommen, dass der in Schritt b) gebildete lösemittelhaltige Hohlfaden an seiner Innenseite mit der polyelektrolythaltigen Innenfüllung in Kontakt gebracht wird, den Polyelektrolyten stabil in der Trennschicht der erfindungsgemäßen Membran verankern.

Über geeignete Nachweismethoden wie z.B. ESCA/XPS, IR-spektroskopischer Nachweise wie Fourier Transform Infrarotspektroskopie (FTIR-ATR) oder durch Umsetzung der sauren Polyelektrolyte mit basischen Farbstoffen

lässt sich feststellen, dass bei den mittels des erfindungsgemäßen Verfahrens hergestellten Hohlfasermembranen der Polyelektrolyt mit negativen Festladungen in der Trennschicht enthalten ist. Der wesentliche Teil der Stützschicht ist hingegen im wesentlichen frei von dem Polyelektrolyten mit negativen Festladungen.

Abhängig von der gewünschten Struktur der an die Trennschicht angrenzenden Stützschicht bzw. im Bereich der äußeren Oberfläche der Hohlfasermembran durchläuft in einer bevorzugten Ausführungsform der Hohlfaden nach seinem Austritt aus der Hohlfadendüse zunächst noch einen Luftspalt, bevor er in ein äußeres Koagulationsbad eintaucht und durch dieses hindurchgeleitet wird. Dabei ist der Luftspalt besonders bevorzugt mit Wasserdampf klimatisiert und temperiert, um hierdurch definierte Bedingungen vor Beginn einer Koagulation an der Außenseite des Hohlfadens einzustellen, z.B. durch eine dosierte Aufnahme von Nichtlöser aus der klimatisierten Atmosphäre, wodurch eine verzögerte Vorkoagulation stattfindet. Die diffusiv induzierte Koagulation kann dann in dem äußeren Fällbad, das vorzugsweise temperiert und vorzugsweise ein wässriges Bad ist, vervollständigt und die Membranstruktur fixiert werden. Das äußere Koagulationsbad kann aber auch allein noch die Aufgabe haben, die Membranstruktur zu fixieren und bereits für eine Extraktion der Hohlfasermembran zu sorgen, wenn der Hohlfaden vor Eintauchen in das äußere Fällbad aufgrund der Fällwirkung der Innenflüssigkeit von innen nach außen durchgefällt ist. Anstelle der Verwendung eines die Koagulation an der Außenseite verlangsamenden klimatisierten Luftspalts kann auch direkt in ein äußeres Koagulationsbad extrudiert werden, das eine geringere Fällwirkung ausübt als die Innenfüllung.

Im Anschluss an die Koagulation und die Fixierung der Membranstruktur wird die so entstandene Hohlfasermembran extrahiert, um sie von Resten des Lösemittelsystems und weiterer löslicher organischer Substanzen zu befreien. Bei Verwendung eines hydrophilen zweiten Polymer wird bei der Extraktion in der Regel auch ein wesentlicher Anteil des hydrophilen zweiten Polymers entfernt. Im Falle der Verwendung eines hydrophoben ersten Polymers verbleibt aber zur Gewährleistung einer genügenden Hydrophilie und Benetzbarkeit ein Anteil des hydrophilen zweiten Polymers in der erfindungsgemäßen Membran. Vorzugsweise beträgt die Konzentration an hydrophilern zweiten Polymer dann 1 bis 15 Gew.-%, bezogen auf das Gewicht der erfindungsgemäßen Membran und besonders bevorzugt 3 bis 10 Gew.-%.

Nach der Extraktion werden die Hohlfasermembranen getrocknet, gegebenenfalls texturiert, um die Austauscheigenschaften der Hohlfasermembranen im späteren Bündel zu verbessern, und letztlich nach den üblichen Verfahren z. B. auf eine Spule gewickelt oder zu Bündeln mit geeigneter Fadenzahl und Länge verarbeitet. Vor der Herstellung der Bündel können zu den Hohlfasermembranen auch Beilegfäden z.B. in Form von Multifilamentgarnen gegeben werden, um so für eine Beabstandung der Hohlfasermembranen untereinander und für eine bessere Umströmbarkeit der einzelnen Hohlfasermembranen zu sorgen.

Es ist auch möglich, das in der erfindungsgemäßen Hohlfasermembran verbliebene hydrophile zweite Polymer z.B. durch Bestrahlung und/oder Anwendung von Hitze zu vernetzen, um es unlöslich zu machen und ein Auswaschen des hydrophilen Polymers in der späteren Anwendung zu vermeiden. Hierzu können die üblichen aus dem Stand der Technik bekannten Methoden angewendet werden.

In einer bevorzugten Ausführungsform der erfindungsgemäßen Hohlfasermembranen erstreckt sich die Stützschicht von der Trennschicht ausgehend über im wesentlichen die gesamte Wand der Hohlfasermembran und weist eine schwammartige Struktur auf, die frei von Fingerporen ist. Solche Membranen besitzen gegenüber Membranen mit kavernenartigen, großen Poren, d.h. mit einer Struktur mit Fingerporen, eine höhere mechanische Festigkeit auf. Hierdurch können geringere Wandstärken und daraus resultierend ein größerer Bereich in Bezug auf die hydraulische Permeabilität der erfindungsgemäßen Membranen realisiert werden.

Vorzugsweise beträgt der Innendurchmesser der erfindungsgemäßen Membranen 100 bis 500 $\mu$m und besonders bevorzugt 150 bis 300 $\mu$m. Die Wandstärke liegt bevorzugt zwischen 10 und 60 $\mu$m und besonders bevorzugt zwischen 25 und 45 $\mu$m.

In einer weiteren bevorzugten Ausgestaltung der Erfindung schließt sich an die schwammartige Stützschicht an der der Trennschicht abgewandten Seite eine Schicht an, deren Poren eine im Vergleich zu den Poren in der Stützschicht geringere Porengröße aufweisen bzw. in der die Porengröße in Richtung auf die Außenseite abnimmt oder dir Struktur der schwammartigen Stützschicht verdichtet sich im äußeren Bereich der Membranwand zur äußeren Oberfläche hin. Membranen mit derartigen Porenstrukturen werden in der EP 828 553 beschrieben, auf deren Offenbarungsgehalt, wie bereits ausgeführt wurde, ausdrücklich Bezug genommen wird.

Die Erfindung soll anhand der im folgenden beschriebenen Beispiele näher erläutert werden.

In den Beispielen wurden folgende Methoden zur Charakterisierung der erhaltenen Membranen angewandt:

<u>Ultrafiltrationsrate in Albuminlösung, Siebkoeffizienten für Cytochrom C und Albumin</u>

Die Ultrafiltrationsrate in Albuminlösung (BSA-Lösung), im folgenden $UFR_{Alb}$ genannt, sowie die Siebkoeffizienten für Cytochrom C, SKcc, und für Albumin, $SK_{Alb}$, werden in Anlehnung an die DIN 58 353 Teil 2 ermittelt.

Als Prüflösung wird eine phosphatgepufferte Kochsalzlösung (PBS) mit 50 g/l Rinderserumalbumin (BSA) und 100 mg/l Cytochrom C eingesetzt. Die Rezeptur der PBS-Lösung entstammt dem Deutschen Arzneimittelbuch (DAB 10, 1. Nachtrag 1992 VII.1.3 "Phosphat-Pufferlösung pH 7,4, natriumchloridhaltige R"). Die Messung erfolgt an Hohlfasermembranmodulen mit einer effektiven Membranfläche von ca. 250 $cm^2$ und einer effektiven Hohlfasermembranlänge von 180 mm. Die Messungen werden bei 37 °C durchgeführt. Über eine erste Pumpe an der Einlaufseite des Membranmoduls wird ein Volumenstrom $Q_B$ durch die Hohlfasermembranen von 200 ml/(min·$m^2$) und durch Regelung einer zweiten Pumpe an der Auslaufseite des Membranmoduls im Verhältnis zur ersten Pumpe an der Einlaufseite ein Filtratfluss $Q_F$ über die Membranwand von 30 ml/(min·$m^2$) eingestellt. Der sich als Folge des Filtratflusses $Q_F$ einstellende Transmembrandruck TMP wird während der Messung erfasst.

Die $UFR_{Alb}$ ergibt sich nach der folgenden Formel:

$$UFR_{Alb} = \frac{Q_F \cdot 60}{TMP \cdot 0{,}75} \; [ml/(h \cdot m^2 \cdot mmHg)],$$

mit

$Q_F$ = Filtratfluss, bezogen auf 1 $m^2$ effektive Membranfläche in [ml/(min·$m^2$)]
TMP = Transmembrandruck in [hPa]

Die Bestimmung der Siebkoeffizienten SK erfolgt nach der Formel:

$$SK = \frac{2 \cdot c_F}{c_{ST} + c_R},$$

mit

$c_F$ = Konzentration des Albumins bzw. des Cytochrom C im Filtrat
$c_{ST}$ = Stammkonzentration des Albumins bzw. des Cytochrom C
$c_R$ = Konzentration des Albumins bzw. des Cytochrom C im Retentat.

Die Konzentration von BSA wird mit einer Methode von Boehringer Mannheim mittels eines Automatic Analyzers für klinische Chemie wie z.B. des Hitachi 704 Automatic Analyzers bestimmt. Als Testprinzip wird eine Bromcresolgrün-Methode verwendet. Auch Cytochrom C wird mittels des Hitachi 704 bestimmt. Zur Eliminierung der Störung der Extinktion für Cytochrom C bei der Wellenlänge $\lambda$= 415 nm durch BSA muss zunächst eine Verdünnungsreihe von BSA in PBS von 0 bis ca. 80 g/l BSA vermessen werden und der Steigungsfaktor der Geraden aus der Extinktion bei $\lambda$= 415 nm über der Konzentration BSA ermittelt werden. Der Korrekturfaktor ergibt sich aus dem Steigungsfaktor und der aktuellen Konzentration $C_{ST}$ für BSA in der Probe.

**Vergleichsbeispiel 1**

Aus 19,5 Gew.-% Polyethersulfon (Ultrason E 6020, Fa. BASF) und 13,65 Gew.-% Polyvinylpyrrolidon (PVP K30, Fa. ISP) wurde in 31,75 Gew.-% ε-Caprolactam, 31,75 Gew.-% γ-Butyrolacton und 3,35 Gew.-% Glycerin durch intensives Mischen bei einer Temperatur von ca. 100°C eine homogene Spinnlösung hergestellt. Die erhaltene Lösung wird auf ca. 60 °C abgekühlt, entgast, filtriert und dem Ringspalt einer auf 67 °C temperierten Hohlfadendüse zugeführt. Zur Ausbildung von Lumen und innenliegender Trennschicht wurde durch die Düsennadel der Hohlfadendüse eine Innenfüllung aus ε-Caprolactam/Glycerin/Wasser im Gewichtsverhältnis 61:4:35 gefördert. Der ausgeformte Hohlfaden wurde durch einen Klimakanal (Klima: ca. 55 °C; 80 % relative Luftfeuchte) geführt und mittels der Innenfüllung sowie durch Hindurchleiten durch ein ca. 75 °C warmes Wasser enthaltendes Bad ausgefällt bzw. fixiert. Die so erhaltene

Hohlfasermembran wurde anschließend mit ca. 90 °C warmem Wasser gewaschen und getrocknet. Es resultierte eine Hohlfasermembran mit einem Lumendurchmesser von ca. 0,2 mm und einer Wanddicke von ca. 0,03 mm. Die für diese Membran erhaltene Ultrafiltrationsrate in Albuminlösung, $UFR_{Alb}$, ist zusammen mit dem Siebkoeffizienten für Cytochrom C, $SK_{CC}$, und dem Siebkoeffizienten für Albumin, $SK_{Alb}$, in der Tabelle 1 aufgeführt.

**Beispiel 1a**

Es wurde eine Hohlfasermembran wie in Vergleichsbeispiel 1 hergestellt, jedoch mit dem Unterschied, dass in der Innenfüllung, bezogen auf ihr Gewicht, zusätzlich 0,25 Gew.-% des Polyelektrolyten Acrylidone ACP 1005 (Fa. ISP) gelöst waren. Acrylidone ACP 1005 ist ein Copolymer aus 75 % Acrylsäure und 25 % Vinylpyrrolidon. Zur Herstellung der Innenfüllung wurde zuerst das Gemisch aus ε-Caprolactam und Wasser vorgelegt, in diesem Gemisch das Acrylidone ACP 1005 gelöst und schließlich Glycerin zugegeben. Die Ergebnisse sind in Tabelle 1 aufgeführt.

**Beispiel 1b**

Es wurde eine Hohlfasermembran wie in Vergleichsbeispiel 1 hergestellt, jedoch mit dem Unterschied, dass in der Innenfüllung, bezogen auf ihr Gewicht, zusätzlich 0,25 Gew.-% des Polyelektrolyten Rohagit S hv (Fa. Degussa/Röhm) gelöst waren. Rohagit S hv ist ein Copolymer aus Methacrylsäure und Methylmethacrylat. Zur Herstellung der Innenfüllung wurde zuerst das Gemisch aus ε-Caprolactam/Wasser vorgelegt, in diesem Gemisch das Rohagit S hv gelöst und schließlich Glycerin zugegeben.

In Tabelle 1 sind $UFR_{Alb}$, $SK_{cc}$ und $SK_{Alb}$ zusammengefasst:

Tabelle 1

| Membran aus | Polyelektrolyt in der Innenfüllung | $UFR_{Alb}$ ml/(h·m$^2$·mmHg) | $SK_{Alb}$ | $SK_{CC}$ |
|---|---|---|---|---|
| Vergleichsbeispiel 1 | - | 37,9 | 0,009 | 0,730 |
| Beispiel 1a | 0,25 Gew.-% ACP 1005 | 35,1 | 0,001 | 0,950 |
| Beispiel 1b | 0,25 Gew.-% Rohagit S hv | 38,7 | 0,001 | 0,952 |

Wie Tabelle 1 zeigt, entstehen durch den Zusatz der Polyelektrolyte zur Innenfüllung Hohlfasermembranen mit beträchtlich erhöhter Selektivität für die Trennung von Albumin und Cytochrom C bei in etwa gleicher Ultrafiltrationsrate.

**Vergleichsbeispiel 2**

Es wurde eine homogene Spinnlösung aus 19,0 Gew.-% Polyethersulfon (Ultrason E 6020, Fa. BASF), 13,68 Gew.-% Polyvinylpyrrolidon (PVP K30, Fa. ISP), 31,98 Gew.-% ε-Caprolactam, 31,98 Gew.-% γ-Butyrolacton und 3,36 Gew.-% Glycerin durch intensives Mischen bei einer Temperatur von ca. 100°C hergestellt. Aus der resultierenden Lösung wurde nach der in Vergleichsbeispiel 1 beschriebenen Vorgehensweise eine Hohlfasermembran mit einem Lumendurchmesser von ca. 0,2 mm und einer Wanddicke von ca. 0,035 mm hergestellt. Die Düsentemperatur betrug 62 °C. Zur Ausbildung von Lumen und Trennschicht wurde durch die Düsennadel der Hohlfadendüse eine Innenfüllung gefördert, die aus ε-Caprolactam/Wasser im Gewichtsverhältnis 55:45 bestand. Die für diese Membran erhaltenen Ergebnisse sind in der Tabelle 2 aufgeführt.

**Beispiel 2**

Es wurde eine Hohlfasermembran wie in Vergleichsbeispiel 2 hergestellt, jedoch mit dem Unterschied, dass in der Innenfüllung bezogen auf ihr Gewicht zusätzlich 0,5 Gew.-% des Polyelektrolyten Acrylidone ACP 1005 (Fa. ISP) gelöst waren. Zur Herstellung der Innenfüllung wurde zuerst das Gemisch aus ε-Caprolactam/Wasser vorgelegt und in diesem Gemisch das Acrylidone ACP 1005 gelöst.

In Tabelle 2 sind $UFR_{Alb}$, $SK_{CC}$ und $SK_{Alb}$ der erhaltenen Hohlfasermembran zusammengefasst.

Tabelle 2

| Membran aus | Polyelektrolyt in der Innenfüllung | $UFR_{Alb}$ ml/(h·m$^2$·mmHg) | $SK_{Alb}$ | $SK_{CC}$ |
|---|---|---|---|---|
| Vergleichsbeispiel 2 | - | 35,2 | 0,008 | 0,594 |

(fortgesetzt)

| Membran aus | Polyelektrolyt in der Innenfüllung | $UFR_{Alb}$ ml/(h·m$^2$·mmHg) | $SK_{Alb}$ | $SK_{CC}$ |
|---|---|---|---|---|
| Beispiel 2 | 0,5 Gew.-%ACP 1005 | 41,6 | 0,000 | 0,944 |

Wie Tabelle 2 zeigt, entsteht durch den Zusatz des Polyelektrolyten zur Innenfüllung eine Hohlfasermembran, die eine beträchtlich erhöhte Selektivität für die Trennung von Albumin und Cytochrom C aufweist.

**Vergleichsbeispiel 3**

Zur Herstellung einer Spinnlösung wurden 19,0 Gew.-% Polyethersulfon (Ultrason E 6020, Fa. BASF) und 13,3 Gew.-% Polyvinylpyrrolidon (PVP K30, Fa. ISP) mit 63,64 Gew.-% Dimethylacetamid (DMAC) und 4,06 Gew.-% Wasser bei einer Temperatur von ca. 70 °C intensiv gemischt. Die resultierende homogene Lösung wurde auf ca. 50°C abgekühlt , entgast, filtriert und dem Ringspalt einer Hohlfadendüse zugeführt, die auf 40 °C temperiert war. Zur Ausbildung von Lumen und innenliegender Trennschicht wurde durch die Düsennadel der Hohlfadendüse eine Innenfüllung gefördert, die aus 62 Gewichtsteilen DMAC und 38 Gewichtsteilen Wasser bestand. Der ausgeformte Hohlfaden wurde durch einen Klimakanal (Klima: 50°C; 90 % relative Luftfeuchte) geführt und anschließend in einem auf ca. 50 °C temperierten, Wasser enthaltenden Fällbad ausgefällt. Die so erhaltene Hohlfasermembran wurde anschließend mit ca. 90°C warmem Wasser gewaschen und bei ca. 90°C getrocknet. Es resultierte eine Hohlfasermembran mit einem Lumendurchmesser von 0,2 mm und einer Wanddicke von 0,035 mm. Die Eigenschaften der so erhaltenen Membran sind in der Tabelle 3 aufgeführt.

**Beispiel 3**

Es wurde eine Hohlfasermembran wie in Vergleichsbeispiel 3 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. ISP) gelöst waren. Zur Herstellung der Innenfüilung wurde zuerst das Acrylidone ACP 1005 im Lösemittel verteilt, anschließend das Wasser hinzugegeben und bei ca. 70°C eine homogene Lösung hergestellt. Die Lösung wurde schließlich auf 30°C abgekühlt. In Tabelle 3 sind $UFR_{Alb}$, $SK_{cc}$ und $SK_{Alb}$ der Hohlfasermembran aus diesem Beispiel zusammengefasst.

Tabelle 3

| Membran aus | Polyelektrolyt in der Innenfüllung | $UFP_{Alb}$ ml/(h·m$^2$·mmHg) | $SK_{Alb}$ | $SK_{CC}$ |
|---|---|---|---|---|
| Vergleichsbeispiel 3 | - | 48,0 | 0,005 | 0,604 |
| Beispiel 3 | 0,5 Gew.-% ACP 1005 | 48,9 | 0,001 | 0,946 |

**Vergleichsbeispiel 4**

Aus den Komponenten 19,0 Gew.-% Polyethersulfon (Ultrason E 6020, Fa. BASF), 13,3 Gew.-% Polyvinylpyrrolidon (PVP K30, Fa. ISP), 62,96 Gew.-% N-Methylpyrrolidon (NMP) und 4,74 Gew.-% Wasser wurde durch intensives Mischen bei einer Temperatur von ca. 70 °C eine homogene Spinnlösung hergestellt. Die Lösung wurde auf ca. 60°C abgekühlt, entgast, filtriert und dem Ringspalt einer auf 60 °C temperierten Hohlfadendüse zugeführt. Zur Ausbildung von Lumen und Trennschicht wurde durch die Düsennadel der Hohlfadendüse eine Innenfüllung gefördert, die aus 50 Gewichtsteilen NMP und 50 Gewichtsteilen Wasser bestand. Die ausgeformte Hohlfasermembran wurde durch einen Klimakanal (Klima: 50 °C; 90 % relative Luftfeuchte) geführt, in auf ca. 70 °C temperiertem Wasser ausgefällt und fixiert sowie anschließend gewaschen und getrocknet. Es resultierte eine Hohlfasermembran mit einem Lumendurchmesser von 0,2 mm und einer Wanddicke von 0,035 mm.

**Beispiel 4**

Es wurde eine Hohlfasermembran wie in Vergleichsbeispiel 4 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. ISP) gelöst waren. Zur Herstellung der Innenfüllung wurde zuerst das Acrylidone ACP 1005 im NMP verteilt, anschließend das Wasser hinzugegeben und bei ca. 70°C eine homogene Lösung hergestellt. Die Lösung wurde schließlich auf 30°C abgekühlt. In Tabelle 4 sind $UFR_{Alb}$, $SK_{CC}$ und $SK_{Alb}$ der Hohlfasermembranen aus Vergleichsbeispiel 4 und aus Beispiel

4 zusammengefasst.

Tabelle 4

| Membran aus | Polyelektrolyt in der Innenfüllung | $UFR_{Alb}$ ml/(h·m$^2$·mmHg) | $SK_{Alb}$ | $SK_{CC}$ |
|---|---|---|---|---|
| Vergleichsbeispiel 4 | - | 42,4 | 0,006 | 0,560 |
| Beispiel 4 | 0,5 Gew.-% ACP 1005 | 42,7 | 0,002 | 0,932 |

**Vergleichsbeispiel 5**

Aus 19,0 Gew.-% Polyethersulfon (Ultrason E 6020, Fa. BASF), 4,75 Gew.-% Polyvinylpyrrolidon (PVP K90, Fa. ISP), 68,62 Gew.-% Dimethylacetamid (DMAC) und 7,63 Gew.-% Glycerin wurde bei einer Temperatur von ca. 70 °C eine homogene Spinnlösung hergestellt. Die Lösung wurde auf ca. 50°C abgekühlt, entgast, filtriert und dem Ringspalt einer Hohlfadendüse zugeführt, die auf 45°C temperiert ist. Zur Ausbildung von Lumen und innenliegender Trennschicht wurde eine Innenfüllung verwendet, die aus 47,5 Gewichtsteilen DMAC, 47,5 Gewichtsteilen Wasser und 5 Gewichtsteilen Glycerin bestand. Der ausgeformte Hohlfaden wurde durch einen Klimakanal (Klima: 50°C; 90 % relative Luftfeuchte) geführt und in einem auf 70 °C temperierten Wasserfällbad ausgefällt und fixiert. Die so erhaltene Hohlfasermembran wurde anschließend mit ca. 90°C warmem Wasser gewaschen und bei ca. 90°C getrocknet. Es resultierte eine Hohlfasermembran mit einem Lumendurchmesser von 0,2 mm und einer Wanddicke von 0,035 mm.

**Beispiel 5**

Es wurde eine Polyethersulfon-Hohlfasermembran wie in Vergleichsbeispiel 5 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. ISP) gelöst waren. Zur Herstellung der Innenfüllung wurde zuerst das Acrylidone ACP 1005 im Dimethylacetamid verteilt, anschließend das Wasser hinzugegeben und bei ca. 70°C eine homogene Lösung hergestellt. Die Lösung wurde schließlich auf 30°C abgekühlt.

In Tabelle 5 sind $UFR_{Alb.}$ $SK_{CC}$ und $SK_{Alb}$ der Hohlfasermembranen aus Vergleichsbeispiel 5 und aus Beispiel 5 zusammengefasst.

Tabelle 5

| Membran aus | Polyelektrolyt in der Innenfüllung | $UFR_{Alb}$ ml/(h·m$^2$·mmHg) | $SK_{Alb}$ | $SK_{CC}$ |
|---|---|---|---|---|
| Vergleichsbeispiel 5 | - | 36,3 | 0,003 | 0,670 |
| Beispiel 5 | 0,5 Gew.-%ACP 1005 | 35,7 | 0,002 | 0,860 |

Wie Tabelle 5 zu entnehmen ist, wird bei Zusatz des Polyelektrolyten ACP zur Innenfüllung eine Polyethersulfon-Hohlfasermembran mit deutlich schärferer Trenncharakteristik erhalten.

**Vergleichsbeispiel 6**

Aus 19,0 Gew.-% Polysulfon (Ultrason S 6010, Fa. BASF), 13,3 Gew.-% Polyvinylpyrrolidon (PVP K30, Fa. ISP), 65,87 Gew.-% N-Methylpyrrolidon (NMP) und 1,83 Gew.-% Wasser wurde eine homogene Spinnlösung hergestellt. Hierzu wurde das Polysulfon zunächst im überwiegenden Teil des NMP bei einer Temperatur von 70°C zunächst eingerührt und anschließend bei 90°C homogen gelöst. Danach wurde das PVP K30 unter Rühren zugegeben und ebenfalls gelöst. Die so erhaltene Lösung wurde auf 50°C abgekühlt und anschließend das Wasser sowie die restliche Menge NMP zugegeben. Die resultierende Lösung wurde entgast, filtriert und dem Ringspalt einer Hohlfadendüse zugeführt, die auf 40 °C temperiert war. Durch die Düsennadel der Hohlfadendüse wurde eine Innenfüllung gefördert, die aus 60 Gewichtsteilen NMP und 40 Gewichtsteilen Wasser bestand. Der ausgeformte Hohlfaden wurde durch einen Klimakanal (Klima: 50 °C; 90 % relative Luftfeuchte) geführt und Fällbad mit auf 70 °C temperiertem Wasser ausgefällt und fixiert sowie anschließend gewaschen und getrocknet. Es resultierte eine Hohlfasermembran mit einem Lumendurchmesser von 0,2 mm und einer Wanddicke von 0,035 mm.

**Beispiel 6**

Es wurde eine Polysulfon-Hohlfasermembran wie in Vergleichsbeispiel 6 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. ISP) gelöst waren. Zur Herstellung der Innenfüllung wird zuerst das Acrylidone ACP 1005 im NMP verteilt, anschließend das Wasser hinzugegeben und bei ca. 70°C eine homogene Lösung hergestellt. Die Lösung wurde schließlich auf 30°C abgekühlt.

In Tabelle 6 sind $UFR_{Alb}$, $SK_{CC}$ und $SK_{Alb}$ der Hohlfasermembranen aus Vergleichsbeispiel 6 und aus Beispiel 6 zusammengefasst.

Tabelle 6

| Membran aus | Polyelektrolyt in der Innenfüllung | $UFR_{Alb}$ ml/(h·m$^2$·mmHg) | $SK_{Alb}$ | $SK_{CC}$ |
|---|---|---|---|---|
| Vergleichsbeispiel 6 | - | 21,0 | 0,003 | 0,490 |
| Beispiel 6 | 0,5 Gew.-% ACP 1005 | 25,0 | 0,001 | 0,811 |

**Vergleichsbeispiel 7**

Aus 19,0 Gew.-% Polyetherimid (Ultem 1010/1000, Fa. GE), 13,3 Gew.-% Polyvinylpyrrolidon (PVP K30, Fa. ISP) und 67,7 Gew.-% N-Methylpyrrolidon (NMP) wurde eine homogene Spinnlösung hergestellt. Hierzu wurde das Polyetherimid zunächst im NMP bei einer Temperatur von 70°C eingerührt und anschließend bei 90°C homogen gelöst. Danach wurde das PVP K30 unter Rühren zugegeben und ebenfalls gelöst. Die so erhaltene Lösung wurde auf 50°C abgekühlt, entgast, filtriert und dann dem Ringspalt einer Hohlfadendüse zugeführt, die auf 40 °C temperiert war. Zur Ausbildung von Lumen und Trennschicht wurde durch die Düsennadel der Hohlfadendüse eine Innenfüllung aus 75 Gewichtsteilen NMP und 25 Gewichtsteilen Wasser gefördert. Der ausgeformte Hohlfaden wurde durch einen Klimakanal (Klima: 50 °C; 90 % relative Luftfeuchte) geführt und in einem auf 70 °C temperierten Wasserbad ausgefällt und fixiert. Nach Waschen und Trocknen resultierte eine Hohlfasermembran mit einem Lumendurchmesser von 0,2 mm und einer Wanddicke von 0,035 mm.

**Beispiel 7**

Es wurde eine Polyetherimid-Hohlfasermembran wie in Vergleichsbeispiel 7 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. (SP) gelöst waren. Zur Herstellung der Innenfüllung wurde zuerst das Acrylidone ACP 1005 im NMP verteilt, anschließend das Wasser hinzugegeben und bei ca. 70°C eine homogene Lösung hergestellt. Die Lösung wurde schließlich auf 30°C abgekühlt.

In Tabelle 7 sind $UFR_{Alb}$, $SK_{CC}$ und $SK_{Alb}$ der Hohlfasermembranen aus Vergleichsbeispiel 7 und aus Beispiel 7 zusammengefasst.

Tabelle 7

| Membran aus | Polyelektrolyt in der Innenfüllung | $UFR_{Alb}$ ml/(h·m$^2$·mmHg) | $SK_{Alb}$ | $SK_{CC}$ |
|---|---|---|---|---|
| Vergleichsbeispiel 7 | - | 36,0 | 0,003 | 0,690 |
| Beispiel 7 | 0,5 Gew.-% ACP 1005 | 30,5 | 0,001 | 0,840 |

**Vergleichsbeispiel 8**

Es wurde eine homogene Spinnlösung aus 19,0 Gew.-% Polyphenylensulfon (Radel R 5000 NT, Fa. Solvay), 13,3 Gew.-% Polyvinylpyrrolidon (PVP K30, Fa. ISP), 64,32 Gew.-% N-Methylpyrrolidon (NMP) und 3,38 Gew.-% Wasser hergestellt. Hierzu wurde das Polyphenylensulfon zunächst im überwiegenden Teil des NMP bei einer Temperatur von 70°C eingerührt und anschließend bei einer Temperatur von 90°C homogen gelöst. Danach wurde das PVP K30 unter Rühren zugegeben und ebenfalls gelöst. Die resultierende Lösung wurde auf 50°C abgekühlt und anschließend das Wasser sowie die restliche Menge NMP zugegeben. Die so erhaltene homogene Lösung wurde entgast, filtriert und dem Ringspalt einer Hohlfadendüse zugeführt, die auf 45 °C temperiert war. Durch die Düsennadel der Hohlfadendüse wurde eine Innenfüllung gefördert, die aus 63 Gewichtsteilen NMP und 37 Gewichtsteilen Wasser bestand. Der ausgeformte Hohlfaden wurde durch einen Klimakanal (Klima: 50 °C; 90 % relative Luftfeuchte) geführt und in einem auf 70 °C temperierten Fällbad mit Wasser ausgefällt. Nach Waschen mit 90°C warmem Wasser und Trocknen resultierte eine Hohlfasermembran mit einem Lumendurchmesser von 0,2 mm und einer Wanddicke von 0,035 mm. Die Eigenschaften der so erhaltenen Hohlfasermembran sind in der Tabelle 8 zusammengestellt.

**Beispiel 8**

Es wurde eine Polyphenylensulfon -Hohlfasermembran wie in Vergleichsbeispiel 8 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. ISP) gelöst waren. Zur Herstellung der Innenfüllung wurde zuerst das Acrylidone ACP 1005 im NMP verteilt, anschließend das Wasser hinzugegeben und bei ca. 70°C eine homogene Lösung hergestellt. Die Lösung wurde schließlich auf 30°C abgekühlt.

In Tabelle 8 sind $UFR_{Alb}$, $SK_{CC}$ und $SK_{Alb}$ dieser Hohlfasermembranen zusammengefasst.

Tabelle 8

| Membran aus | Polyelektrolyt in der Innenfüllung | $UFR_{Alb}$ ml/(h·m²·mmHg) | $SK_{Alb}$ | $SK_{CC}$ |
|---|---|---|---|---|
| Vergleichsbeispiel 8 | - | 30,7 | 0,001 | 0,470 |
| Beispiel 8 | 0,5 Gew.% ACP 1005 | 33,3 | 0,000 | 0,840 |

**Vergleichsbeispiel 9**

In einem Rührbehälter wurde bei einer Temperatur von ca. 70°C aus 19,0 Gew.-% Polyethersulfon (Ultrason E 6020, Fa. BASF), 13,3 Gew.-% Polyvinylpyrrolidon (PVP K30, Fa. ISP), 62,96 Gew.-% N-Methylpyrrolidon (NMP) und 4,74 Gew.-% Wasser eine homogene Spinnlösung hergestellt. Die Spinnlösung wurde anschließend auf ca. 55°C abgekühlt, entgast, filtriert und dem Ringspalt einer Hohlfadendüse zugeführt, die auf 45 °C temperiert war. Zur Ausbildung von Lumen und Trennschicht wurde durch die Düsennadel der Hohlfadendüse eine Innenfüllung aus 54 Gewichtsteilen NMP und 46 Gewichtsteilen Wasser gefördert. Der ausgeformte Hohlfaden wurde durch einen Klimakanal (Klima: 50°C; 90 % relative Luftfeuchte) geführt und in einem auf ca. 70 °C temperierten Fällbad mit Wasser ausgefällt. Nach Waschen mit ca. 85 °C warmem Wasser und Trocknen mit Heißluft resultiert eine Hohlfasermembran mit einem Lumendurchmesser von 0,2 mm und einer Wanddicke von 0,035 mm.

**Beispiele 9 a - e**

Es wurde die Abhängigkeit der Membrancharakteristik von der Konzentration des in der Innenfüllung enthaltenen Polyelektrolyten untersucht. Hierzu wurden Hohlfasermembranen wie in Vergleichsbeispiel 9 hergestellt, jedoch mit dem Unterschied, dass in der Innenfüllung, bezogen auf ihr Gewicht, zusätzlich 0,01 bis 0,25 Gew.-% des Polyelektrolyten Rohagit S hv (Fa. Degussa/Röhm) gelöst waren. Zur Herstellung der Innenfüllung wurde jeweils zuerst das Rohagit S hv im NMP verteilt, nach Zugabe von Wasser bei ca. 70°C gelöst und anschließend auf 30°C abgekühlt.

In Tabelle 9 sind $UFR_{Alb}$, $SK_{CC}$ und $SK_{Alb}$ der Hohlfasermembranen aus Vergleichsbeispiel 9 und aus den Beispielen 9 a - e zusammengefasst.

Tabelle 9

| Membran aus | Polyelektrolyt in der Innenfüllung | $UFR_{Alb}$ ml/(h·m²·mmHg) | $SK_{Alb}$ | $SK_{cc}$ |
|---|---|---|---|---|
| Vergleichsbeispiel 9 | - | 31,5 | 0,003 | 0,640 |
| Beispiel 9a | 0,01 Gew.-% Rohagit S hv | 32,9 | 0,002 | 0,820 |
| Beispiel 9b | 0,025 Gew.-% Rohagit S hv | 32,7 | 0,001 | 0,935 |
| Beispiel 9c | 0,05 Gew.-% Rohagit S hv | 31,1 | 0,001 | 0,960 |
| Beispiel 9d | 0,10 Gew.-% Rohagit S hv | 33,1 | 0,001 | 0,970 |
| Beispiel 9e | 0,25 Gew.-% Rohagit S hv | 32,9 | 0,001 | 0,970 |

Es zeigt sich, dass im vorliegenden Beispiel oberhalb einer Konzentration von ca. 0,10 Gew.-% Rohagit S hv in der Innenfüllung keine weitere Verbesserung der Membrancharakteristik erzielt wird.

**Vergleichsbeispiel 10a**

Zur Herstellung einer Spinnlösung wurden in einem Rührbehälter 19,0 Gew.-% Polyethersulfon (Ultrason E 6020, Fa. BASF), 13,3 Gew.-% Polyvinylpyrrolidon (PVP K30, Fa. ISP), 62,96 Gew.-% N-Methylpyrrolidon (NMP) und

4,74 Gew.-% Wasser bei einer Temperatur von ca. 70°C intensiv gerührt. Die resultierende homogene Lösung wurde auf ca. 50°C abgekühlt, entgast, filtriert und dem Ringspalt einer auf 45 °C temperierten Hohlfadendüse zugeführt. Durch die Düsennadel der Hohlfadendüse wurde eine Innenfüllung aus 54 Gewichtsteilen NMP und 46 Gewichtsteilen Wasser gefördert. Der ausgeformte Hohlfaden wurde durch einen Klimakanal (Klima: 50°C; 90 % relative Luftfeuchte) geführt und in einem auf ca. 63°C temperierten, Wasser enthaltenden Fällbad ausgefällt und fixiert. Nach Waschen mit 85°C warmem Wasser und Trocknen mit Heißluft resultierte eine Hohlfasermembran mit einem Lumendurchmesser von 0,2 mm und einer Wanddicke von 0,03 mm. Die Eigenschaften der so erhaltenen Hohlfasermembran sind in der Tabelle 10 aufgeführt.

**Beispiele 10a-d, Vergleichsbeispiel 10b**

Zu Untersuchung des Einflusses der Polyelektrolytkonzentration wurden Hohlfasermembranen wie in Vergleichsbeispiel 10a hergestellt, jedoch mit dem Unterschied, dass in der Innenfüllung, bezogen auf ihr Gewicht zusätzlich 0,01 bis 0,25 Gew.-% des Polyelektrolyten Rohagit S ENV (Fa. Degussa/Röhm) gelöst waren. Rohagit S ENV ist ein Copolymer aus Methacrylsäure und Methylmethacrylat. Zur Herstellung der Innenfüllung wurde jeweils zuerst das Rohagit S ENV im NMP verteilt, nach Zugabe von Wasser bei ca. 70 °C gelöst und anschließend auf 30°C abgekühlt.
In Tabelle 10 sind $UFR_{Alb}$. $SK_{CC}$ und $SK_{Alb}$ der Hohlfasermembranen gemäß der Vergleichsbeispiele 10a und 10b und aus den Beispielen 10 a - d zusammengefasst.

Tabelle 10

| Membran aus | Polyelektrolyt in der Innenfüllung | $UFR_{Alb}$ ml/(h·m²·mmHg) | $SK_{Alb}$ | $SK_{cc}$ |
|---|---|---|---|---|
| Vergleichsbeispiel 10a | - | 28,9 | 0,002 | 0,640 |
| Vergleichsbeispiel 10b | 0,010 Gew.-% Rohagit S ENV | 26,5 | 0,002 | 0,690 |
| Beispiel 10a | 0,025 Gew.% Rohagit S ENV | 28,3 | 0,001 | 0,800 |
| Beispiel 10b | 0,05 Gew.-% Rohagit S ENV | 28,3 | 0,001 | 0,875 |
| Beispiel 10c | 0,10 Gew.% Rohagit S ENV | 27,0 | 0,000 | 0,880 |
| Beispiel 10d | 0,25 Gew.-% Rohagit S ENV | 27,3 | 0,001 | 0,890 |

**Vergleichsbeispiel 11a**

Zur Herstellung einer homogenen Spinnlösung wurden 19,0 Gew.-% Polyethersulfon (Ultrason E 6020, Fa. BASF), 13,3 Gew.-% Polyvinylpyrrolidon (PVP K30, Fa. ISP), 62,96 Gew.-% N-Methylpyrrolidon (NMP) und 4,74 Gew.-% Wasser in einem Rührbehälter bei einer Temperatur von ca. 70°C intensiv gerührt. Die resultierende Lösung wurde auf ca. 50°C abgekühlt, entgast, filtriert und dem Ringspalt einer Hohlfadendüse zugeführt, die auf 45°C temperiert war. Zur Ausbildung von Lumen und innenliegender Trennschicht wurde durch die Düsennadel der Hohlfadendüse eine Innenfüllung gefördert, die aus 54 Gewichtsteilen NMP und 46 Gewichtsteilen Wasser bestand. Die ausgeformte Hohlfasermembran wurde durch einen Klimakanal (Klima: 50°C; 90 % relative Luftfeuchte) geführt und in einem auf ca. 67°C temperierten Wasser enthaltenden Fällbad ausgefällt und fixiert. Nach Waschen mit 85°C warmem Wasser und Trocknen mit Heißluft resultierte eine Hohlfasermembran mit einem Lumendurchmesser von 0,2 mm und einer Wanddicke von 0,035 mm.

**Beispiele 11 a-d, Vergleichsbeispiel 11b**

Es wurden verschiedene Hohlfasermembranen wie in Vergleichsbeispiel 11a hergestellt, jedoch mit dem Unterschied, dass in der Innenfüllung, bezogen auf ihr Gewicht, zusätzlich der Polyelektrolyt Acrylidone ACP 1005 (Fa. ISP) in Konzentrationen von 0,01 bis 0,25 Gew.-% gelöst war. Zur Herstellung der Innenfüllung wurde jeweils zuerst zuerst das Acrylidone ACP 1005 im NMP verteilt, anschließend das Wasser hinzugegeben und bei ca. 70°C eine homogene Lösung hergestellt. Die Lösung wurde schließlich auf 30°C abgekühlt.
In Tabelle 11 sind $UFR_{Alb}$, $SK_{CC}$ und $SK_{Alb}$ der Hohlfasermembranen aus den Vergleichsbeispielen 11a und b und aus den Beispielen 11 a-d zusammengefasst.

Tabelle 11

| Membran aus | Polyelektrolyt in der Innenfüllung | $UFR_{Alb}$ ml/(h·m²·mmHg) | $SK_{Alb}$ | $SK_{CC}$ |
|---|---|---|---|---|
| Vergleichsbeispiel 11a | - | 36,1 | 0,002 | 0,632 |
| Vergleichsbeispiel 11 b | 0,01 Gew.-% ACP 1005 | 42,5 | 0,004 | 0,784 |
| Beispiel 11a | 0,025 Gew.-% ACP 1005 | 40,1 | 0,005 | 0,830 |
| Beispiel 11 b | 0,05 Gew.-% ACP 1005 | 39,6 | 0,003 | 0,889 |
| Beispiel 11c | 0,10 Gew.-% ACP 1005 | 38,8 | 0,001 | 0,912 |
| Beispiel 11d | 0,25 Gew.-% ACP 1005 | 33,6 | 0,000 | 0,968 |

**Vergleichsbeispiele 12a-f**

In einem Rührbehälter wurde aus 19,0 Gew.-% Polyethersulfon (Ultrason E 6020, Fa. BASF), 13,3 Gew.-% Polyvinylpyrrolidon (PVP K30, Fa. ISP), 62,96 Gew.-% N-Methylpyrrolidon (NMP) und 4,74 Gew.-% Wasser unter intensivem Rühren bei einer Temperatur von ca. 70°C eine homogene Spinnlösung hergestellt. Die Lösung wurde auf ca. 50°C abgekühlt, filtriert, entgast und dem Ringspalt einer auf 45°C temperierten Hohlfadendüse zugeführt. Zur Ausbildung von Lumen und innenliegender Trennschicht wird durch die Düsennadel der Hohlfadendüse eine aus NMP und Wasser bestehende Innenfüllung gefördert. Es wurden sechs verschiedene Membranen hergestellt, wobei die Zusammensetzung der Innenfüllung hinsichtlich der Gewichtsanteile NMP:Wasser stufenweise im Bereich von 48:52 bis 58:42 variiert wurde. Die jeweilige ausgeformte Hohlfasermembran wurde durch einen Klimakanal (Klima: 50°C; 90 % relative Luftfeuchte) geführt und in einem auf ca. 70 °C temperierten Wasserbad ausgefällt. Nach Waschen mit 80 °C warmem Wasser und Trocknen mit Heißluft resultieren Hohlfasermembranen mit einem Lumendurchmesser von 0,2 mm und einer Wanddicke von 0,035 mm.

**Beispiele 12a-f**

Es wurden Hohlfasermembranen wie in den Vergleichsbeispielen 12a-f hergestellt, jedoch mit dem Unterschied, dass in der Innenfüllung, bezogen auf ihr Gewicht zusätzlich jeweils 0,1 Gew.-% des Polyelektrolyten Rohagit S hv (Fa. Degussa/Röhm) gelöst waren. Zur Herstellung der Innenfüllung wurde jeweils zuerst das Rohagit S hv im NMP verteilt, nach Zugabe von Wasser bei ca. 70 °C gelöst und anschließend auf 30°C abgekühlt.

In Tabelle 12 sind $UFR_{Alb}$, $SK_{cc}$ und $SK_{Alb}$ der Hohlfasermembranen aus den Vergleichsbeispielen 12a-f und aus den Beispielen 12a-f zusammengefasst.

Tabelle 12

| Membran aus | NMP:Wasser | $UFR_{Alb}$ ml/(h·m²·mmHg) | $SK_{Alb}$ | $SK_{CC}$ |
|---|---|---|---|---|
| Vergleichsbeispiel12a | 48:52 | 26,3 | 0,001 | 0,550 |
| Vergleichsbeispiel 12b | 50:50 | 33,7 | 0,003 | 0,660 |
| Vergleichsbeispiel12c | 52:48 | 36,5 | 0,009 | 0,740 |
| Vergleichsbeispiel 12d | 54:46 | 42,4 | 0,027 | 0,780 |
| Vergleichsbeispiel 12e | 56:44 | 45,9 | 0,047 | 0,810 |
| Vergleichsbeispiel 12f | 58:42 | 57,8 | 0,075 | 0,860 |
| | | | | |
| Vergleichsbeispiel 12a | 48:52 | 24,0 | 0,001 | 0,960 |
| Beispiel12b | 50:50 | 30,0 | 0,000 | 0,920 |
| Beispiel 12c | 52:48 | 33,1 | 0,001 | 0,980 |
| Beispiel12d | 54:46 | 42,5 | 0,002 | 0,980 |
| Beispiel12e | 56:44 | 47,5 | 0,001 | 0,970 |
| Beispiel 12f | 58:42 | 52,4 | 0,000 | 0,950 |

Tabelle 12 zeigt, dass Membranen bei gleichem NMP:Wasser - Verhältnis eine erheblich höhere Selektivität für die Trennung von Albumin und Cytochrom C aufweisen, wenn bei der Membranherstellung der Innenfüllung lediglich 0,1 Gew.-% des Polyelektrolyten Rohagit S hv zugesetzt wird. Ohne den Zusatz des Polyelektrolyten Rohagit S hv lassen sich hohe Siebkoeffizienten für Cytochrom C nur dann erreichen, wenn hohe Siebkoeffizienten für Albumin in Kauf genommen werden.

**Vergleichsbeispiel 13**

Aus 19,0 Gew.-% Polyethersulfon (Ultrason E 6020, Fa. BASF), 13,3 Gew.-% Polyvinylpyrrolidon (PVP K30, Fa. ISP), 62,96 Gew.-% N-Methylpyrrolidon (NMP) und 4,74 Gew.-% Wasser wurde in einem Rührbehälter bei einer Temperatur von ca. 70°C unter intensivem Rühren eine homogene Spinnlösung hergestellt. Die Lösung wurde anschließend auf ca. 50°C abgekühlt, entgast, filtriert und dem Ringspalt einer Hohlfadendüse zugeführt, die auf 45°C temperiert war. Durch die Düsennadel der Hohlfadendüse wurde eine Innenfüllung gefördert, die aus 52 Gewichtsteilen NMP und 48 Gewichtsteilen Wasser bestand. Der ausgeformte Hohlfaden wurde durch einen Klimakanal (Klima: 50°C; 90 % relative Luftfeuchte) geführt und in einem ca. 75°C warmes Wasser enthaltenden Fällbad ausgefällt. Nach Waschen mit 80°C warmem Wasser und Trocknen mit Heißluft resultierte eine Hohlfasermembran mit einem Lumendurchmesser von 0,2 mm und einer Wanddicke von 0,035 mm.

**Beispiel 13**

Es wurde eine Hohlfasermembran wie in Vergleichsbeispiel 13 hergestellt, jedoch mit dem Unterschied, dass in der Innenfüllung, bezogen auf ihr Gewicht, zusätzlich 0,25 Gew.-% des Polyelektrolyten Rohagit ENV (Fa. Degussa/Röhm) gelöst waren. Zur Herstellung der Innenfüllung wurde jeweils zuerst das Rohagit S ENV im NMP verteilt, nach Zugabe von Wasser bei ca. 70 °C gelöst und anschließend auf 30°C abgekühlt.

Die Eigenschaften der Hohlfasermembranen aus Vergleichsbeispiel 13 und aus Beispiel 13 sind in der Tabelle 13 zusammengefasst.

Tabelle 13

| Membran aus | Polyelektrolyt in der Innenfüllung | $UFR_{Alb}$ ml/(h·m$^2$·mmHg) | $SK_{Alb}$ | $SK_{CC}$ |
|---|---|---|---|---|
| Vergleichsbeispiel 13 | - | 31,5 | 0,003 | 0,640 |
| Beispiel 13 | 0,25 Gew.% Rohagit ENV | 35,1 | 0,000 | 1,000 |

**Beispiel 14**

Zur Herstellung einer Spinnlösung wurden 19,0 Gew.-% Polyethersulfon (Ultrason E 6020, BASF), 13,3 Gew.-% Polyvinylpyrrolidon (PVP K30, ISP), 62,96 Gew.-% N-Methylpyrrolidon (NMP) und 4,74 Gew.-% Wasser bei einer Temperatur von ca. 60 °C intensiv gerührt. Die resultierende homogene Lösung wurde auf ca. 50°C abgekühlt, entgast, filtriert und dem Ringspalt einer auf 45°C temperierten Hohlfadendüse zugeführt. Durch die Düsennadel der Hohlfadendüse wurde eine Innenfüllung gefördert, die aus 52 Gewichtsteilen NMP und 48 Gewichtsteilen Wasser sowie einem Zusatz von 0,1 Gew.-%, bezogen auf das Gewicht der Innenfüllung, des Polyelektrolyten Carbopol 1382 (Fa. Noveon) bestand. Zur Herstellung der Innenfüllung wird das Carbopol 1382 zuerst in NMP dispergiert und nach Zugabe von Wasser bei ca. 70 °C gelöst. Der ausgeformte Hohlfaden wurde durch einen Klimakanal (Klima: 55°C; 80 % relative Luftfeuchte) geführt und in einem Fällbad mit auf ca. 71 °C temperiertem Wasser ausgefällt. Nach Waschen mit 90°C warmem Wasser und Trocknen mit Heißluft resultierte eine Hohlfasermembran mit einem Lumendurchmesser von 0,2 mm und einer Wanddicke von 0,03 mm. Die Eigenschaften dieser Hohlfasermembran sind in Tabelle 14 dargestellt.

Tabelle 14

| Membran aus | Polyelektrolyt in der Innenfüllung | $UFR_{Alb}$ ml/(h·m$^2$·mmHg) | $SK_{Alb}$ | $SK_{CC}$ |
|---|---|---|---|---|
| Beispiel 14 | 0,1 Gew.-% Carbopol 1382 | 35,82 | 0,002 | 0,956 |

**Beispiele 15a-b**

19,0 Gew.-% Polyethersulfon (Ultrason E 6020, Fa. BASF), 13,3 Gew.-% Polyvinylpyrrolidon (PVP K30, Fa. ISP), 62,96 Gew.-% N-Methylpyrrolidon (NMP) und 4,74 Gew.-% Wasser wurden bei einer Temperatur von ca. 60 °C

unter intensivem Rühren zu einer homogenen Spinnlösung verarbeitet. Die Lösung wird entgast, filtriert und dem Ringspalt einer Hohlfadendüse zugeführt, die auf 45 °C temperiert war. Zur Ausbildung von Lumen und Trennschicht wurde durch die Düsennadel der Hohlfadendüse eine Innenfüllung gefördert, die aus 55,95 Gewichtsteilen NMP, 43,95 Gewichtsteilen Wasser sowie 0,1 Gewichtsteile des Polyelektrolyten Styleze 2000 (Fa. ISP) (Beispiel 19a), bzw. aus 55,88 Gewichtsteilen NMP, 43,87 Gewichtsteilen Wasser sowie 0,25 Gewichtsteile Styleze 2000 (Beispiel 19b) bestand. Zur Herstellung der Innenfüllung wurde das Styleze 2000 zuerst in NMP eingerührt und nach Zugabe von Wasser bei 70 °C gelöst. Styleze 2000 ist ein Copolymer aus Acrylsäure, Vinylpyrrolidon und Laurylmethacrylat. Der ausgeformte Hohlfaden wurde durch einen Klimakanal (Klima: 55 °C; 70 % relative Luftfeuchte) geführt und in einem Fällbad mit auf ca. 65 °C temperiertem Wasser ausgefällt. Nach Waschen mit 90°C warmem Wasser und Trocknen mit Heißluft resultiert eine Hohlfasermembran mit einem Lumendurchmesser von 0,2 mm und einer Wanddicke von 0,03 mm, deren $UFR_{Alb}$, $SK_{CC}$ und $SK_{Alb}$ in Tabelle 15 dargestellt sind.

Tabelle 15

| Membran aus | Polyelektrolyt in der Innenfüllung | $UFR_{Alb}$ ml/(h·m²·mmHg) | $SK_{Alb}$ | $SK_{CC}$ |
|---|---|---|---|---|
| Beispiel 15a | 0,1 Gew.-% Styleze 2000 | 36,04 | 0,001 | 0,931 |
| Beispiel 15b | 0,25 Gew.-% Styleze 2000 | 38,09 | 0,001 | 0,937 |

## Patentansprüche

1. Hydrophile, mit Wasser benetzbare, semipermeable Hohlfasermembran insbesondere zur Hemodialyse, Hemodiafiltration oder Hemofiltration auf Basis eines die Membranstruktur aufbauenden synthetischen hydrophilen Polymers oder einer Kombination aus einem die Membranstruktur aufbauenden synthetischen ersten Polymer und einem hydrophilen zweiten Polymer, wobei das synthetische erste Polymer in der Kombination hydrophil oder hydrophob sein kann und das hydrophile zweite Polymer im Falle, dass das synthetische erste Polymer hydrophob ist, für die Hydrophilie der Hohlfasermembran sorgt, wobei die Hohlfasermembran über ihre Wand eine offenporige integral asymmetrische Struktur, an ihrer dem Lumen zugewandten Innenoberfläche eine Poren aufweisende Trennschicht von 0,1 bis 2 μm Dicke sowie an die Trennschicht angrenzend eine offenporige Stützschicht besitzt, wobei die Hohlfasermembran eine Ultrafiltrationsrate in Albuminlösung $UFR_{Alb}$ im Bereich von 25 bis 60 ml/(h·m²·mmHg) und nach einer vorherigen Trocknung einen Siebkoeffizienten für Cytochrom C $SK_{CC}$ von mindestens 0,8 in Kombination mit einem Siebkoeffizienten für Albumin $SK_{Alb}$ von höchstens 0,005 aufweist, wobei $UFR_{Alb}$, $SK_{cc}$ und $SK_{Alb}$ nach den in der Beschreibung angegebenen Methoden zu ermitteln sind und wobei die Hohlfasermembran im trocknen Zustand frei von Zusätzen ist, die die Poren in der Membranwand stabilisieren, **dadurch gekennzeichnet, dass** in der Trennschicht ein Polyelektrolyt mit negativen Festladungen physikalisch gebunden ist.

2. Hohlfasermembran nach Anspruch 1, **dadurch gekennzeichnet, dass** sie ein die Membranstruktur aufbauendes hydrophobes erstes Polymer und ein hydrophiles zweites Polymer umfasst.

3. Hohlfasermembran nach Anspruch 2, **dadurch gekennzeichnet, dass** das hydrophobe erste Polymer ein aromatisches Sulfonpolymer wie z.B. Polysulfon, Polyethersulfon Polyphenylensulfon oder Polyarylethersulfon, ein Polycarbonat, Polyimid, Polyetherimid, Polyetherketon, Polyphenylensulfid oder ein Copolymer oder eine Mischung dieser Polymere ist.

4. Hohlfasermembran nach Anspruch 3, **dadurch gekennzeichnet, dass** das hydrophobe erste Polymer ein Polysulfon oder ein Polyethersulfon ist.

5. Hohlfasermembran nach einem oder mehreren der Ansprüche 1 bis 4, **dadurch gekennzeichnet, dass** das hydrophile zweite Polymer Polyvinylpyrrolidon, Polyethylenglykol, Polyvinylalkohol, Polyglykolmonoester, Polysorbitat, Carboxylmethylcellulose oder ein Copolymer dieser Polymere ist.

6. Hohlfasermembran nach einem oder mehreren der Ansprüche 1 bis 5, **dadurch gekennzeichnet, dass** sich die Stützschicht von der Trennschicht ausgehend über im wesentlichen die gesamte Wand der Hohlfasermembran erstreckt, eine schwammartige Struktur aufweist und frei von Fingerporen ist.

7. Hohlfasermembran nach einem oder mehreren der Ansprüche 1 bis 6, **dadurch gekennzeichnet, dass** sie einen Siebkoeffizienten für Cytochrom C von mindestens 0,85 aufweist.

**8.** Hohlfasermembran nach einem oder mehreren der Ansprüche 1 bis 7, **dadurch gekennzeichnet, dass** sie einen Siebkoeffizienten für Albumin von höchstens 0,003 aufweist.

**9.** Hohlfasermembran nach einem oder mehreren der Ansprüche 1 bis 8 mit einer Ultrafiltrationsrate in Albuminlösung im Bereich von 30 bis 55 ml/(h·$m^2$·mmHg).

**10.** Verfahren zur Herstellung einer hydrophilen, mit Wasser benetzbaren semipermeablen Hohlfasermembran gemäß Anspruch 1 mit einem Siebkoeffizienten für Cytochrom C von mindestens 0,8 in Kombination mit einem Siebkoeffizienten für Albumin von höchstens 0,005, wobei das Verfahren die Schritte umfasst

a. Herstellung einer homogenen Spinnlösung umfassend 12 bis 30 Gew.-%, bezogen auf das Gewicht der Spinnlösung, eines synthetischen hydrophilen Polymers oder 12 bis 30 Gew.-%, bezogen auf das Gewicht der Spinnlösung, eines synthetischen ersten Polymers in Kombination mit 0,1 bis 30 Gew.%, bezogen auf das Gewicht der Spinnlösung, eines hydrophilen zweiten Polymers, wobei das synthetische erste Polymer in Falle der Kombination hydrophil oder hydrophob sein kann, sowie gegebenenfalls weitere Additive in einem Lösemittelsystem,
b. Extrusion der Spinnlösung durch den Ringspalt einer Hohlfadendüse zu einem Hohlfaden,
c. Extrusion einer Innenfüllung durch die zentrale Öffnung der Hohlfadendüse, wobei die Innenfüllung ein Koagulationsmedium für das synthetische hydrophile Polymer bzw. das synthetische erste Polymer ist, welches ein Lösemittel sowie ein Nichtlösemittel für das synthetische hydrophile Polymer bzw. das synthetische erste Polymer umfasst,
d. Inkontaktbringen der Innenfüllung mit der Innenseite des Hohlfadens zur Auslösung der Koagulation im Inneren des Hohlfadens und zur Ausbildung einer Trennschicht an der Innenseite des Hohlfadens und der Membranstruktur,
e. Hindurchleiten des Hohlfadens durch ein Koagulationsbad, um gegebenenfalls die Ausbildung der Membranstruktur zu vervollständigen und um die Membranstruktur zu fixieren,
f. Extraktion der so gebildeten Hohlfasermembran zur Entfernung des Lösemittelsystems sowie löslicher Substanzen,
g. Trocknung der Hohlfasermembran,

**dadurch gekennzeichnet, dass** die Innenfüllung einen Polyelektrolyten mit negativen Festladungen enthält, wobei der Gewichtsanteil des Polyelektrolyten im Bereich von 0,025 bis 5 Gew.-%, bezogen auf das Gewicht der Innenfüllung, beträgt.

**11.** Verfahren nach Anspruch 10, **dadurch gekennzeichnet, dass** die Spinnlösung 12 bis 30 Gew.-%, bezogen auf das Gewicht der Spinnlösung, eines hydrophoben ersten Polymers in Kombination mit 0,1 bis 30 Gew.-%, bezogen auf das Gewicht der Spinnlösung, eines hydrophilen zweiten Polymers enthält.

**12.** Verfahren nach Anspruch 11, **dadurch gekennzeichnet, dass** als erstes hydrophobes Polymer ein aromatisches Sulfonpolymer wie z.B. Polysulfon, Polyethersulfon, Polyphenylensulfon oder Polyarylethersulfon, ein Polycarbonat, Polyimid, Polyetherimid, Polyetherketon, Polyphenylensulfid, ein Copolymer oder eine Mischung dieser Polymere eingesetzt wird.

**13.** Verfahren nach einem oder mehreren der Ansprüche 10 bis 12, **dadurch gekennzeichnet, dass** als zweites hydrophiles Polymer Polyvinylpyrrolidon, Polyethylenglykol, Polyvinylalkohol, Polyglykolmonoester, Polysorbitat, Carboxylmethylcellulose oder ein Copolymer dieser Polymere eingesetzt wird.

**14.** Verfahren nach einem oder mehreren der Ansprüche 10 bis 13, **dadurch gekennzeichnet, dass** das Lösemittelsystem ein polares aprotisches Lösemittel umfasst.

**15.** Verfahren nach einem oder mehreren der Ansprüche 10 bis 14, **dadurch gekennzeichnet, dass** der Polyelektrolyt ausgewählt ist aus der Gruppe der Polyphosphorsäuren, der Polysulfonsäuren oder der Polycarbonsäuren.

**16.** Verfahren nach Anspruch 15, **dadurch gekennzeichnet, dass** die Polycarbonsäuren Homo- oder Copolymere der Acrylsäure sind.

## Claims

1. A hydrophilic, water-wettable, semipermeable hollow-fibre membrane, particularly for hemodialysis, hemodiafiltration and hemofiltration, based on a synthetic hydrophilic polymer constituting the membrane structure or a combination of a synthetic first polymer constituting the membrane structure and a hydrophilic second polymer, whereby the synthetic first polymer in the combination can be hydrophilic or hydrophobic and the hydrophilic second polymer provides for the hydrophilicity of the hollow-fibre membrane in the case that the synthetic first polymer is hydrophobic, the hollow-fibre membrane having an open-pored, integrally asymmetric structure across its wall, a porous separating layer of thickness 0.1 to 2 $\mu$m on its inner surface facing the lumen, and an open-pored supporting layer adjoining the separating layer, and having an ultrafiltration rate in albumin solution, $UFR_{Alb}$, in the range of 25 to 60 ml/(h·m$^2$·mmHg) and, after prior drying, a minimum sieving coefficient for cytochrome c, $SC_{cc}$, of 0.8 combined with a maximum sieving coefficient for albumin, $SC_{Alb}$, of 0.005, whereby $UFR_{Alb}$, $SC_{cc}$ and $SC_{Alb}$ are to be determined by the methods given in the description and whereby the hollow-fibre membrane in the dry state is free from additives stabilising the pores in the membrane wall, **characterised in that** a polyelectrolyte with fixed negative charges is physically bound in the separating layer.

2. Hollow-fibre membrane according to Claim 1, **characterised in that** it comprises a hydrophobic first polymer constituting the membrane structure and a hydrophilic second polymer.

3. Hollow-fibre membrane according to Claim 2, **characterised in that** the hydrophobic first polymer is an aromatic sulfone polymer (such as polysulfone, polyethersulfone, polyphenylenesulfone or polyarylethersulfone), a polycarbonate, polyimide, polyetherimide, polyetherketone, or polyphenylene sulfide, or a copolymer or mixture of these polymers.

4. Hollow-fibre membrane according to Claim 3, **characterised in that** the hydrophobic first polymer is a polysulfone or a polyethersulfone.

5. Hollow-fibre membrane according to one or more of Claims 1 to 4, **characterised in that** the hydrophilic second polymer is polyvinylpyrrolidone, polyethylene glycol, polyvinyl alcohol, polyglycol monoester, polysorbate, carboxylmethylcellulose, or a copolymer of these polymers.

6. Hollow-fibre membrane according to one or more of Claims 1 to 5, **characterised in that** the supporting layer extends from the separating layer across essentially the entire wall of the hollow-fibre membrane, has a sponge-like structure and is free from finger pores.

7. Hollow-fibre membrane according to one or more of Claims 1 to 6, **characterised in that** it has a minimum sieving coefficient for cytochrome c of 0.85.

8. Hollow-fibre membrane according to one or more of Claims 1 to 7, **characterised in that** it has a maximum sieving coefficient for albumin of 0.003.

9. Hollow-fibre membrane according to one or more of Claims 1 to 8 with an ultrafiltration rate in albumin solution in the range of 30 to 55 ml/(h·m$^2$·mmHg).

10. Method for producing a hydrophilic, water-wettable, semipermeable hollow-fibre membrane according to Claim 1, with a minimum sieving coefficient for cytochrome c of 0.8 combined with a maximum sieving coefficient for albumin of 0.005, the method comprising the following steps:

    a. preparing a homogeneous spinning solution comprising 12 to 30 wt.%, relative to the weight of the spinning solution, of a synthetic hydrophilic polymer or 12 to 30 wt.%, relative to the weight of the spinning solution, of a synthetic first polymer in combination with 0.1 to 30 wt.%, relative to the weight of the spinning solution, of a hydrophilic second polymer, whereby the synthetic first polymer, in the case of the combination, can be hydrophilic or hydrophobic, and, if necessary, other additives in a solvent system,
    b. extruding the spinning solution through the annular slit of a hollow-fibre die to give a hollow fibre,
    c. extruding an interior filler through the central opening of the hollow-fibre die, the interior filler being a coagulation medium for the synthetic hydrophilic polymer or synthetic first polymer and comprising a solvent and a non-solvent for the synthetic hydrophilic polymer or synthetic first polymer,
    d. bringing the interior filler into contact with the inner surface of the hollow fibre, to initiate coagulation in the

interior of the hollow fibre and for formation of a separating layer on the inner surface of the hollow fibre and of the membrane structure,
e. passing the hollow fibre through a coagulation bath to complete the formation of the membrane structure if necessary, and to fix the membrane structure,
f. extracting the hollow-fibre membrane thus formed, to remove the solvent system and soluble substances,
g. drying the hollow-fibre membrane,

**characterised in that** the interior filler contains a polyelectrolyte with fixed negative charges, the proportion by weight of the polyelctrolyte lying in the range of 0.025 to 5 wt.% relative to the weight of the interior filler.

**11.** Method according to Claim 10, **characterised in that** the spinning solution contains 12 to 30 wt.%, relative to the weight of the spinning solution, of a hydrophobic first polymer in combination with 0.1 to 30 wt.%, relative to the weight of the spinning solution, of a hydrophilic second polymer.

**12.** Method according to Claim 11, **characterised in that** an aromatic sulfone polymer (such as polysulfone, polyethersulfone, polyphenylenesulfone or polyarylethersulfone), a polycarbonate, polyimide, polyetherimide, polyetherketone, polyphenylene sulfide, or a copolymer or mixture of these polymers is used as the hydrophobic first polymer.

**13.** Method according to one or more of Claims 10 to 12, **characterised in that** polyvinylpyrrolidone, polyethylene glycol, polyvinyl alcohol, polyglycol monoester, polysorbate, carboxylmethylcellulose, or a copolymer of these polymers is used as the hydrophilic second polymer.

**14.** Method according to one or more of Claims 10 to 13, **characterised in that** the solvent system comprises a polar aprotic solvent.

**15.** Method according to one or more of Claims 10 to 14, **characterised in that** the polyelectrolyte is selected from the group of polyphosphoric acids, polysulfonic acids or polycarboxylic acids.

**16.** Method according to Claim 15, **characterised in that** the polycarboxylic acids are homo- or copolymers of acrylic acid.

## Revendications

**1.** Membrane en fibres creuses hydrophile, mouillable à l'eau, semi-perméable pour hémodialyse, hémodiafiltration ou hémofiltration, à base d'un polymère hydrophile, synthétique qui forme la structure de la membrane, ou d'une combinaison d'un premier polymère synthétique, formant la structure de la membrane, et d'un deuxième polymère hydrophile, le premier polymère synthétique de la combinaison pouvant être hydrophile ou hydrophobe et le deuxième polymère hydrophile, quand le premier polymère synthétique est hydrophobe, assurant l'hydrophilie de la membrane en fibres creuses, la membrane en fibres creuses possédant sur sa paroi une structure intégralement asymétrique, à pores ouverts, sur sa surface intérieure, orientée vers le lumen, et une couche de séparation pourvue de pores, laquelle présente une épaisseur de 0,1 à 2 µm, ainsi qu'une couche de support à pores ouverts qui avoisine la couche de séparation, la membrane en fibres creuses présentant un taux d'ultrafiltration en solution d'albumine $UFR_{Alb}$ située dans une plage de 25 à 60 ml / (h.m$^2$.mmHg) et après un séchage préalable un coefficient de tamisage pour cytochrome C $SK_{cc}$ d'au moins 0,8 en combinaison avec un coefficient de tamisage pour albumine $SK_{Alb}$ de 0,005 au plus, $UFR_{Alb}$, $SK_{cc}$ et $SK_{Alb}$ étant à déterminer selon les méthodes mentionnées dans la description, et la membrane en fibres creuses à l'état sec étant vierge d'additifs qui stabilisent les pores dans la paroi de la membrane, **caractérisée en ce que**, dans la couche de séparation est physiquement lié un polyélectrolyte avec des charges fixes négatives.

**2.** Membrane en fibres creuses selon la revendication 1, **caractérisée en ce qu'**elle comprend un premier polymère hydrophobe qui forme la structure de la membrane, et un deuxième polymère hydrophile.

**3.** Membrane en fibres creuses selon la revendication 2, **caractérisée en ce que** le premier polymère hydrophobe est un polymère sulfonique aromatique, comme, par exemple, du polysulfone, du polyéther sulfone, du sulfone de polyphénylène ou du sulfone de polyaryléther, un polycarbonate, un poly imide, un polyéther imide, une cétone de polyéther, un polysulfure de phénylène ou un copolymère ou un mélange de ces polymères.

4. Membrane en fibres creuses selon la revendication 3, **caractérisée en ce que** le premier polymère hydrophobe est du polysulfone ou du polyéther sulfone.

5. Membrane en fibres creuses selon l'une des revendications 1 à 4, **caractérisée en ce que** le deuxième polymère hydrophile est du polyvinylpyrrolidone, du polyéthylène glycol, de l'alcool polyvinylique, du polyglycolmonoester, du polysorbitate, de la cellulose carboxyméthylique ou un copolymère de ces polymères.

6. Membrane en fibres creuses selon l'une des revendications 1 à 5, **caractérisée en ce que** la couche de support s'étend à partir de la couche de séparation sur sensiblement toute la paroi de la membrane en fibres creuses, présente une structure genre éponge et est exempte de pores tubulaires.

7. Membrane en fibres creuses selon l'une des revendications 1 à 6, **caractérisée en ce qu'**elle présente un coefficient de tamisage pour cytochrome C d'au moins 0,85.

8. Membrane en fibres creuses selon l'une des revendications 1 à 7, **caractérisée en ce qu'**elle présente un coefficient de tamisage pour albumine de 0,003 au plus.

9. Membrane en fibres creuses selon l'une des revendications 1 à 8, avec un taux d'ultrafiltration en solution d'albumine qui est situé dans une plage de 30 à 55 ml / (h.$m^2$.mmHg).

10. Procédé pour la fabrication d'une membrane en fibres creuses hydrophile, mouillable à l'eau, semi-perméable selon la revendication 1, avec un coefficient de tamisage pour cytochrome C d'au moins 0,8 en combinaison avec un coefficient de tamisage pour albumine de 0,005 au plus, le procédé comprenant les étapes suivantes :

    a. fabrication d'une solution de filage homogène, comprenant, par rapport au poids de la solution de filage, 12 à 30 % en poids d'un polymère synthétique, hydrophile ou 12 à 30 % en poids, par rapport au poids de la solution de filage, d'un premier polymère synthétique, en combinaison avec 0,1 à 30 % en poids, par rapport au poids de la solution de filage, d'un deuxième polymère hydrophile, le premier polymère synthétique pouvant être, en cas de combinaison, hydrophile ou hydrophobe, ainsi que, le cas échéant, d'autre additifs dans un système de solvant,
    b. extrusion en un fil creux de la solution de filage, par la fente annulaire d'une buse à fil creux,
    c. extrusion d'un remplissage intérieur par l'ouverture centrale de la buse à fil creux, le remplissage intérieur étant un agent de coagulation pour le polymère synthétique, hydrophile, respectivement pour le premier polymère synthétique, qui comprend un solvant, ainsi qu'un non-solvant pour le polymère synthétique, hydrophile, respectivement pour le premier polymère synthétique,
    d. mise en contact du remplissage intérieur avec la face intérieure du fil creux pour le déclenchement de la coagulation à l'intérieur du fil creux et pour la formation d'une couche de séparation sur la face intérieure du fil creux et de la structure de la membrane,
    e. passage du fil creux par un bain de coagulation pour compléter, le cas échéant, la formation de la structure de la membrane et pour fixer la structure de la membrane,
    f. extraction de la membrane à fil creux ainsi formée pour l'élimination du système de solvant ainsi que des substances solubles,
    g. séchage de la membrane en fibres creuses,

    **caractérisé en ce que** le remplissage intérieur contient un polyélectrolyte avec des charges fixes négatives, le pourcentage en poids du polyélectrolyte étant situé dans une plage de 0,025 à 5 % en poids par rapport au poids du remplissage intérieur.

11. Procédé selon la revendication 10, **caractérisé en ce que** la solution de filage contient, par rapport au poids de la solution de filage, 12 à 30 % en poids d'un premier polymère hydrophobe en combinaison avec 0,1 à 30 % en poids, par rapport au poids de la solution de filage.

12. Procédé selon la revendication 11, **caractérisé en ce que**, comme premier polymère hydrophobe, on utilise un polymère sulfonique aromatique comme, par exemple, du polysulfone, du polyéther sulfone, du sulfone de polyphénylène ou du sulfone de polyaryléther, un polycarbonate, un poly imide, un polyéther imide, une cétone de polyéther, un polysulfure de phénylène ou un copolymère ou un mélange de ces polymères.

13. Procédé selon l'une des revendications 10 à 12, **caractérisé en ce que**, comme deuxième polymère hydrophile,

on utilise du polyvinylpyrrolidone, du polyéthylène glycol, de l'alcool polyvinylique, du polyglycolmonoester, du polysorbitate, du polysorbitat, de la cellulose carboxyméthylique ou un copolymère de ces polymères.

**14.** Procédé selon l'une ou plusieurs des revendications 10 à 13, **caractérisé en ce que** le système de solvants comprend un solvant aprotique, polaire.

**15.** Procédé selon l'une des revendications 10 à 14, **caractérisé en ce que** le polyélectrolyte est sélectionné dans le groupe des acides polyphosphoriques, des acides polysulfoniques ou des acides polycarboxyliques.

**16.** Procédé selon la revendication 15, **caractérisé en ce que** les acides polycarboxyliques sont des homopolymères ou des copolymères de l'acide acrylique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5505859 A
- DE 4230077
- EP 305787 A
- EP 344581 A
- EP 168783 A
- EP 828553 A
- EP 716859 A
- US 5683584 A
- WO 0069549 A
- EP 568045 A
- EP 750938 A